(19) Europäisches Patentamt
European Patent Office
Office européen des brevets

(11) EP 4 368 662 B1

(12) **EUROPEAN PATENT SPECIFICATION**

(45) Date of publication and mention of the grant of the patent:
**24.12.2025 Bulletin 2025/52**

(21) Application number: **23207500.2**

(22) Date of filing: **02.11.2023**

(51) International Patent Classification (IPC):
***C08J 5/18*** *(2006.01)* ***C08G 73/10*** *(2006.01)*
***C08G 73/14*** *(2006.01)* ***C08L 79/08*** *(2006.01)*

(52) Cooperative Patent Classification (CPC):
(C-Sets available)
**C08J 5/18; C08G 73/1039; C08G 73/1042; C08G 73/14;** C08J 2379/08; C08L 2201/10 (Cont.)

(54) **POLYAMIDE-IMIDE-BASED FILM, PROCESS FOR PREPARING THE SAME, AND COVER WINDOW AND DISPLAY DEVICE COMPRISING THE SAME**

POLYAMIDIMIDBASIERTE FOLIE, VERFAHREN ZUR HERSTELLUNG DAVON UND ABDECKFENSTER UND ANZEIGEVORRICHTUNG DAMIT

FILM À BASE DE POLYAMIDE-IMIDE, SON PROCÉDÉ DE PRÉPARATION, ET FENÊTRE DE COUVERTURE ET DISPOSITIF D’AFFICHAGE LE COMPRENANT

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **14.11.2022 KR 20220151837**

(43) Date of publication of application:
**15.05.2024 Bulletin 2024/20**

(73) Proprietor: **SK microworks solutions Co., Ltd.**
**Cheonan-si, Chungcheongnam-do 31044 (KR)**

(72) Inventors:
- **LEE, Jin Yong**
  **16336 Suwon-si (KR)**
- **KIM, Han Jun**
  **16336 Suwon-si (KR)**
- **LEE, Jin Woo**
  **16336 Suwon-si (KR)**

(74) Representative: **Dehns**
**10 Old Bailey**
**London EC4M 7NG (GB)**

(56) References cited:
**WO-A1-2022/054850**
**WO-A1-2022/138606**
**KR-B1- 101 949 316**
**US-A1- 2020 407 521**
**US-A1- 2023 406 986**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C08K 5/05, C08L 79/08**

## Description

### Technical Field

Embodiments relate to a polyamide-imide-based film, to a process for preparing the same, and to a cover window and a display device comprising the same.

### Background Art

Polyimide-based resins such as poly(amide-imide) (PAI) are excellent in resistance to friction, heat, and chemicals. Thus, they are employed in such applications as primary electrical insulation, coatings, adhesives, resins for extrusion, heat-resistant paintings, heat-resistant boards, heat-resistant adhesives, heat-resistant fibers, and heat-resistant films.

Polyimide is used in various fields. For example, polyimide is made in the form of a powder and used as a coating for a metal or a magnetic wire. It is mixed with other additives depending on the applications thereof. In addition, polyimide is used together with a fluoropolymer as a painter for decoration and corrosion prevention. It also plays a role of bonding a fluoropolymer to a metal substrate. Further, polyimide is used to coat kitchenware, used as a membrane for gas separation by virtue of its heat resistance and chemical resistance, and used in natural gas wells for filtration of such contaminants as carbon dioxide, hydrogen sulfide, and impurities.

In recent years, polyimide has been developed in the form of a film, which is less expensive and has excellent optical, mechanical, and thermal characteristics. Such a polyimide-based film may be applied to display materials for organic light-emitting diodes (OLEDs) or liquid crystal displays (LCDs), and the like, and to antireflection films, compensation films, and retardation films if retardation properties are implemented.

However, when such a polyimide-based film, specifically, a polyamide-imide-based film, is immersed in a solvent during post-processing, there is a problem in that the optical properties are significantly deteriorated. Accordingly, the demand for the development of films with excellent optical properties and solvent resistance is continuously increasing.

WO 2022/054850 discloses a solvent for use in synthesizing synthetic resins such as polyimide resins and polyurethane resins, where the solvent has high transparency and high storage stability, and enables a high-molecular-weight polymer to be synthesized in a short time while preventing the reaction from becoming turbid during or after the reaction. Also disclosed in the aforementioned document is a method for producing a synthetic resin using the solvent.

### Detailed Description of the Invention

### Technical Problem

The embodiments aim to provide a polyamide-imide-based film excellent in optical properties and solvent resistance, a process for preparing the same, and a cover window and a display device comprising the same.

### Solution to the Problem

The polyamide-imide-based film according to the invention comprises an alcohol-based supplement. The content of the alcohol-based supplement is 10 to 1,000 ppm based on the total weight of the film and the alcohol-based supplement comprises an aliphatic alcohol substituted with an alkyl group and an unsubstituted aliphatic alcohol. The content of the aliphatic alcohol substituted with an alkyl group is 5 to 500 ppm based on the total weight of the film, and the content of the unsubstituted aliphatic alcohol is 5 to 500 ppm based on the total weight of the film.

The cover window for a display device according to the invention comprises the polyamide-imide-based film and a functional layer.

The display device according to the invention comprises a display unit; and a cover window disposed on the display unit, wherein the cover window comprises the polyamide-imide-based film and a functional layer.

The process for preparing a polyamide-imide-based film according to the invention comprises polymerizing a diamine compound, a dianhydride compound, and a dicarbonyl compound in an organic solvent to prepare a polyamide-imide-based polymer solution; casting the solution and drying it to prepare a gel sheet; and thermally treating the gel sheet. The step of preparing the polyamide-imide-based polymer solution comprises adding an alcohol-based supplement, wherein the alcohol-based supplement comprises an aliphatic alcohol substituted with an alkyl group and an unsubstituted aliphatic alcohol, the content of the aliphatic alcohol substituted with an alkyl group is 5 to 500 ppm based on the total weight of the film, and the content of the unsubstituted aliphatic alcohol is 5 to 500 ppm based on the total weight of the film.

## Advantageous Effects of the Invention

As the polyamide-imide-based film according to the invention comprises an alcohol-based supplement, wherein the alcohol-based supplement comprises an aliphatic alcohol substituted with an alkyl group and an unsubstituted aliphatic alcohol, the content of the aliphatic alcohol substituted with an alkyl group is 5 to 500 ppm based on the total weight of the film, and the content of the unsubstituted aliphatic alcohol is 5 to 500 ppm based on the total weight of the film, the solubility of high-molecular-weight materials in the polyamide-imide polymer solution is enhanced during the polymerization process, and the degree of polymerization of low-molecular-weight materials is improved, resulting in an enhanced polydispersity (PDI) of the film and excellent optical properties such as yellow index and solvent resistance.

In particular, when a film is exposed to a solvent during the post-processing, a film with low solvent resistance may suffer from deterioration in the optical and mechanical properties such as a steep increase in the haze after immersion in a solvent; thus, it is advantageous for a film to have excellent solvent resistance.

## Brief Description of the Drawings

Fig. 1 is a schematic exploded view of a display device according to an embodiment.

Fig. 2 is a schematic perspective view of a display device according to an embodiment.

Fig. 3 is a schematic cross-sectional view of a display device according to an embodiment.

Fig. 4 is a schematic flow diagram of a process for preparing a polyamide-imide-based film according to an embodiment.

## Best Mode for Carrying Out the Invention

Hereinafter, the embodiments will be described in detail with reference to the accompanying drawings so that those skilled in the art to which the present invention pertains may easily practice them. However, the embodiments may be implemented in many different ways and are not limited to those described herein.

Throughout the present specification, in the case where each film, window, panel, layer, or the like is mentioned to be formed "on" or "under" another film, window, panel, layer, or the like, it means not only that one element is directly formed on or under another element, but also that one element is indirectly formed on or under another element with other element(s) interposed between them. In addition, the term on or under with respect to each element may be referenced to the drawings. For the sake of description, the sizes of individual elements in the appended drawings may be exaggeratedly depicted and do not indicate the actual sizes. In addition, the same reference numerals refer to the same elements throughout the specification.

Throughout the present specification, when a part is referred to as "comprising" an element, it is understood that other elements may be comprised, rather than other elements are excluded, unless specifically stated otherwise.

In the present specification, a singular expression is interpreted to cover a singular or plural number that is interpreted in context unless otherwise specified.

In addition, all numbers and expressions related to the quantities of components, reaction conditions, and the like used herein are to be understood as being modified by the term "about," unless otherwise indicated.

The terms first, second, and the like are used herein to describe various elements, and the elements should not be limited by the terms. The terms are used only for the purpose of distinguishing one element from another.

In addition, the term "substituted" as used herein means to be substituted with at least one substituent group selected from the group consisting of deuterium, -F, -Cl, -Br, -I, a hydroxyl group, a cyano group, a nitro group, an amino group, an amidino group, a hydrazine group, a hydrazone group, an ester group, a ketone group, a carboxyl group, a substituted or unsubstituted alkyl group, a substituted or unsubstituted alkenyl group, a substituted or unsubstituted alkynyl group, a substituted or unsubstituted alkoxy group, a substituted or unsubstituted alicyclic organic group, a substituted or unsubstituted heterocyclic group, a substituted or unsubstituted aryl group, and a substituted or unsubstituted heteroaryl group. The substituent groups enumerated above may be connected to each other to form a ring.

### Polyamide-imide-based film

The invention provides a polyamide-imide film that is excellent in optical properties such as yellow index and haze, as well as solvent resistance.

The polyamide-imide-based film according to the invention comprises a polyamide-imide-based polymer and an alcohol-based supplement.

The content of the alcohol-based supplement is 10 to 1,000 ppm based on the total weight of the film.

The alcohol-based supplement comprises a substituted aliphatic alcohol and an unsubstituted aliphatic alcohol.

Specifically, the substituted aliphatic alcohol of the alcohol-based supplement is substituted with an alkyl group. The alkyl group may be a substituted or unsubstituted alkyl group.

The substituted aliphatic alcohol of the alcohol-based supplement may be selected from the group consisting of propanol substituted with an alkyl group, butanol substituted with an alkyl group, pentanol substituted with an alkyl group, hexanol substituted with an alkyl group, heptanol substituted with an alkyl group, and octanol substituted with an alkyl group.

For example, the substituted aliphatic alcohol of the alcohol-based supplement may be hexanol substituted with an alkyl group. In addition, the alcohol-based supplement may comprise at least one selected from the group consisting of 2-methylhexanol, 3-methylhexanol, 2-ethylhexanol, 3-ethylhexanol, 2-propylhexanol, and 3-propylhexanol, but it is not limited thereto.

As the polyamide-imide-based film comprises an aliphatic alcohol substituted with an alkyl group, it acts as a polymerization supplement during the polymerization process to improve the degree of polymerization of low-molecular-weight materials and reduce remaining low-molecular-weight materials, and a film produced has excellent optical properties and solvent resistance.

Additionally, the alcohol-based supplement comprises an unsubstituted aliphatic alcohol.

Specifically, the unsubstituted aliphatic alcohol of the alcohol-based supplement may be selected from the group consisting of methanol, isophthalic acid (IPA), 1,2-butanediol, and 1,3-butanediol, but it is not limited thereto.

As the polyamide-imide-based film comprises an unsubstituted aliphatic alcohol, it acts as a dissolution supplement during the polymerization process to improve the solubility of polymer materials in the polyamide-imide-based polymer solution to improve the degree of polymerization and enhance polydispersity index (PDI), and a film produced has excellent optical properties and solvent resistance.

The content of the alcohol-based supplement in the polyamide-imide-based film is 10 to 1,000 ppm based on the total weight of the film.

Specifically, the content of the alcohol-based supplement in the film may be 15 ppm to 1,000 ppm, 20 ppm to 1,000 ppm , 30 ppm to 1,000 ppm, 40 ppm to 1,000 ppm, 50 ppm to 1,000 ppm, 80 ppm to 1,000 ppm, or 100 ppm to 1,000 ppm, and 800 ppm to 10 ppm, 600 ppm to 10 ppm, 400 ppm to 10 ppm, 300 ppm to 10 ppm, or 200 ppm to 10 ppm, based on the total weight of the film.

More specifically, the content of the alcohol-based supplement in the film may be 20 to 1,000 ppm, 50 to 1,000 ppm, 80 to 1,000 ppm, 100 to 1,000 ppm, 10 to 400 ppm, 20 to 400 ppm, 50 to 400 ppm, 80 to 400 ppm, 100 to 400 ppm, 10 to 200 ppm, 20 to 200 ppm, 50 to 200 ppm, 80 to 200 ppm, or 100 to 200 ppm, based on the total weight of the film.

In the invention, the content of the aliphatic alcohol substituted with an alkyl group in the polyamide-imide-based film is 5 to 500 ppm based on the total weight of the film.

Specifically, the content of the aliphatic alcohol substituted with an alkyl group in the film may be 5 ppm to 500 ppm, 10 ppm to 500 ppm, 15 ppm to 500 ppm, 20 ppm to 500 ppm, 30 ppm to 500 ppm, 40 ppm to 500 ppm, 50 ppm to 500 ppm, 80 ppm to 500 ppm, and 500 ppm to 5 ppm, 400 ppm to 5 ppm, 300 ppm to 5 ppm, 250 ppm to 5 ppm, 200 ppm to 5 ppm, 150 ppm to 5 ppm, or 100 ppm to 5 ppm based on the total weight of the film.

More specifically, the content of the aliphatic alcohol substituted with an alkyl group in the film may be 5 to 500 ppm, 10 to 500 ppm, 20 to 500 ppm, 40 to 500 ppm, 50 to 500 ppm, 5 to 400 ppm, 10 to 400 ppm, 20 to 400 ppm, 40 to 400 ppm, 50 to 400 ppm, 5 to 200 ppm, 10 to 200 ppm, 20 to 200 ppm, 40 to 200 ppm, 50 to 200 ppm, 5 to 150 ppm, 10 to 150 ppm, 20 to 150 ppm, 40 to 150 ppm, 50 to 150 ppm, 5 to 100 ppm, 10 to 100 ppm, 20 to 100 ppm, 40 to 100 ppm, or 50 to 100 ppm, based on the total weight of the film.

In the invention, the content of the unsubstituted aliphatic alcohol in the polyamide-imide-based film is 5 to 500 ppm based on the total weight of the film.

Specifically, the content of the unsubstituted aliphatic alcohol in the film may be 5 ppm to 500 ppm, 10 ppm to 500 ppm, 15 ppm to 500 ppm, 20 ppm to 500 ppm, 30 ppm to 500 ppm, 40 ppm to 500 ppm, 50 ppm to 500 ppm, 80 ppm to 500 ppm, and 500 ppm to 5 ppm, 400 ppm to 5 ppm, 300 ppm to 5 ppm, 250 ppm to 5 ppm, 200 ppm to 5 ppm, 150 ppm to 5 ppm, or 100 ppm to 5 ppm based on the total weight of the film.

More specifically, the content of the unsubstituted aliphatic alcohol in the film may be 5 to 500 ppm, 10 to 500 ppm, 20 to 500 ppm, 40 to 500 ppm, 50 to 500 ppm, 5 to 400 ppm, 10 to 400 ppm, 20 to 400 ppm, 40 to 400 ppm, 50 to 400 ppm, 5 to 200 ppm, 10 to 200 ppm, 20 to 200 ppm, 40 to 200 ppm, 50 to 200 ppm, 5 to 150 ppm, 10 to 150 ppm, 20 to 150 ppm, 40 to 150 ppm, 50 to 150 ppm, 5 to 100 ppm, 10 to 100 ppm, 20 to 100 ppm, 40 to 100 ppm, or 50 to 100 ppm, based on the total weight of the film.

If the content of the alcohol-based supplement in the polyamide-imide-based film according to an embodiment satisfies the above range, the solubility of high-molecular-weight materials in the polyamide-imide polymer solution is enhanced, and the degree of polymerization of low-molecular-weight materials is improved, which reduces undissolved materials in the polymer solution and enhances polydispersity index (PDI). As a result, the film produced is excellent in optical properties such as yellow index and solvent resistance.

In contrast, if the content of the alcohol-based supplement in the film according to an embodiment is less than the above range, the change in haze after immersion in a solvent would be large, which deteriorates optical properties after post-processing, and the residual low-molecular-weight materials and relatively low degree of polymerization would deteriorate optical properties such as yellow index. In addition, if the content of the alcohol-based supplement exceeds the above range, the solubility in the polymer solution decreases, whereby unreacted low-molecular-weight materials remain and the degree of polymerization of the polymer decreases. The optical properties of a film may deteriorate. When a product is produced using the film, the defect rate of the products may be high.

In the invention, the alcohol-based supplement comprises an aliphatic alcohol substituted with an alkyl group and an unsubstituted aliphatic alcohol, the content of the aliphatic alcohol substituted with an alkyl group is 5 to 500 ppm, and the content of the unsubstituted aliphatic alcohol is 5 to 500 ppm, based on the total weight of the film.

Specifically, the content ratio of the aliphatic alcohol substituted with an alkyl group to the unsubstituted aliphatic alcohol in the film may be 1:0.2 to 1:5, 1:0.3 to 1:3, 1:0.5 to 1:2, 1:0.7. to 1:1.3, or 1:0.8 to 1:1.2, but it is not limited thereto.

The film may have a polydispersity index (PDI) of 1.5 to 5.

Specifically, the polydispersity index (PDI) of the film may be 1.5 or more, 1.8 or more, 2 or more, 2.2 or more, or 2.5 or more, and 5 or less, 4.5 or less, 4 or less, 3.8 or less, 3.6 or less, 3.5 or less, 3.4 or less, 3.2 or less, or 3 or less.

More specifically, the polydispersity index (PDI) of the film may be 1.5 to 4.5, 1.5 to 4, 1.5 to 3.5, 1.5 to 3.2, 1.5 to 3, 2 to 5, 2 to 4.5, 2 to 4, 2 to 3.5, 2 to 3.2, 2 to 3, 2 to 5, 2 to 4.5, 2 to 4, 2 to 3.5, 2 to 3.2, 2 to 3, 2.2 to 5, 2.2 to 4.5, 2.2 to 4, 2.2 to 3.5, 2.2 to 3.2, 2.2 to 3, 2.5 to 5, 2.5 to 4.5, 2.5 to 4, 2.5 to 3.5, 2.5 to 3.2, or 2.5 to 3, but it is not limited thereto.

The polydispersity index (PDI) may refer to a value obtained by dividing the weight average molecular weight (Mw) by the number average molecular weight (Mn). Specifically, the weight average molecular weight (Mw) and number average molecular weight (Mn) may be measured by gel permeation chromatography (GPC) analysis.

A high polydispersity index (PDI) value means that the polymer has a broad molecular weight distribution, that is, it contains both low-molecular-weight materials and high-molecular-weight materials.

As the polydispersity index (PDI) of the polyamide-imide-based film according to an embodiment satisfies the above range, residual low-molecular-weight materials are reduced, the degree of polymerization is improved, and a film produced has excellent optical properties such as yellow index and solvent resistance.

In contrast, if the polydispersity index (PDI) of the polyamide-imide-based film according to an embodiment is outside the above range, the change in haze after immersion in a solvent is large, which deteriorates optical properties after post-processing.

In an embodiment, in GPC analysis of the polyamide-imide-based film, the peak intensity of the peak covering a retention time of 19.7 minutes may be 1,500 mV or less, 1,300 mV or less, 1,100 mV or less, 900 mV or less, 700 mV or less, or 600 mV or less, but it is not limited thereto. The peak intensity may refer to the detection signal (detector response) of a GPC detector, which corresponds to the signal and intensity detected regardless of the type of the GPC detector.

The GPC analysis may be carried out at 50°C using a 1260 Infinity GPC system of Agilent by feeding NMP (0.1% LiBr) as a mobile phase at a flow rate of 1.0 ml/minute, connecting one guard column and two PLgel Mixed C columns in series as a column, using PMMA as a standard material, and using a RID detector.

If the peak intensity of the peak covering a retention time of 19.7 minutes in the GPC analysis of the polyamide-imide-based film satisfies the above range or lower, residual low-molecular-weight materials with a weight average molecular weight of less than 10,000 g/mole are reduced, thereby improving polydispersity (PDI), and a film produced has excellent optical properties and solvent resistance.

According to an embodiment, the polyamide-imide-based film has a modulus of 5.0 GPa or more. Specifically, the modulus may be 5.5 GPa or more, 5.7 GPa or more, or 6 GPa or more.

The polyamide-imide-based film may have a transmittance of 80% or more. For example, the transmittance may be 85% or more, 88% or more, and it may be 100% or less or 99% or less.

The polyamide-imide-based film has a haze of 1% or less. Specifically, the haze may be 0.8% or less, 0.7% or less, 0.6% or less, or 0.5% or less, but it is not limited thereto.

The transmittance and/or haze of the film may be values measured in the visible light wavelength range (400 to 700 nm). Specifically, the transmittance of the film may be the total light transmittance measured in the visible light wavelength range.

The polyamide-imide-based film has a yellow index of 5 or less. For example, the yellow index may be 4.5 or less, 4.0 or less, or 3.5 or less, but it is not limited thereto.

In an embodiment, the polyamide-imide-based film has a thickness deviation of 3 μm or less or 2 μm or less based on a thickness of 50 μm. In addition, the thickness deviation rate may be 5% or less, 4% or less, or 3% or less, but it is not limited thereto.

In an embodiment, the polyamide-imide-based film may have a transmittance of 80% or more, a haze of 1% or less, and a yellow index of 5 or less, based on a film thickness of 50 μm, but it is not limited thereto.

When the polyamide-imide-based film is immersed in MIBK for 5 seconds and dried at 80°C for 3 minutes, the amount of change in haze ($\Delta Hz_M$) may be 4% or less when its haze is measured.

Specifically, the amount of change in haze ($\Delta Hz_M$) of the polyamide-imide-based film after it is immersed in MIBK may be 3.5% or less, 3% or less, 2.5% or less, 2% or less, 1.5% or less, 1% or less, 0.8% or less, or 0.6% or less, but it is not limited thereto.

$\Delta Hz_M$ (%) is a value of $Hz_M$ - $Hz_0$, in which $Hz_0$ stands for the initial haze (%) of the film, and $Hz_M$ stands for the haze (%) measured after the film is immersed in an MIBK solvent for 5 seconds and dried at 80°C for 3 minutes.

When the polyamide-imide-based film is immersed in PGME for 5 seconds and dried at 80°C for 3 minutes, the amount of change in haze ($\Delta Hz_P$) may be 5% or less when its haze is measured.

Specifically, the amount of change in haze ($\Delta Hz_P$) of the polyamide-imide-based film after it is immersed in PGME may be 4.5% or less, 4% or less, 3% or less, 2.5% or less, 2% or less, 1.5% or less, 1% or less, 0.8% or less, or 0.6% or less, but it is not limited thereto.

$\Delta Hz_P$ (%) is a value of $Hz_P$ - $Hz_0$, in which $Hz_0$ stands for the initial haze (%) of the film, and $Hz_P$ stands for the haze (%) measured after the film is immersed in a PGME solvent for 5 seconds and dried at 80°C for 3 minutes.

The average value ($\Delta Hz_{AVG}$) of the amount of change in haze ($\Delta Hz_M$) of the polyamide-imide-based film after it is immersed in MIBK 5 seconds and dried at 80°C for 3 minutes and the amount of change in haze ($\Delta Hz_P$) of the polyamide-imide-based film after it is immersed in PGME 5 seconds and dried at 80°C for 3 minutes may be 4% or less.

Specifically, the average value ($\Delta Hz_{AVG}$) of the amounts of change in haze of the polyamide-imide-based film may be 3.5% or less, 3% or less, 2.5% or less, 2% or less, 1.5% or less, 1% or less, 0.8% or less, or 0.6% or less, but it is not limited thereto.

The average value ($\Delta Hz_{AVG}$) of the amounts of change in haze may be a measure for determining the resistance of a film to various solvents.

The polyamide-imide-based film may have a compressive strength of 0.4 kgf/μm or more. Specifically, the compressive strength may be 0.45 kgf/μm or more, or 0.46 kgf/μm or more, but it is not limited thereto.

When the polyamide-imide-based film is perforated at a speed of 10 mm/minute using a 2.5-mm spherical tip in a UTM compression mode, the maximum diameter (mm) of perforation including a crack is 60 mm or less. Specifically, the maximum diameter of perforation may be 5 to 60 mm, 10 to 60 mm, 15 to 60 mm, 20 to 60 mm, 25 to 60 mm, or 25 to 58 mm, but it is not limited thereto.

The polyamide-imide-based film may have a surface hardness of HB or higher. Specifically, the surface hardness may be H or higher, or 2H or higher, but it is not limited thereto.

The polyamide-imide-based film may have a tensile strength of 15 $kgf/mm^2$ or more. Specifically, the tensile strength may be 18 $kgf/mm^2$ or more, 20 $kgf/mm^2$ or more, 21 $kgf/mm^2$ or more, or 22 $kgf/mm^2$ or more, but it is not limited thereto.

The polyamide-imide-based film may have an elongation of 15% or more. Specifically, the elongation may be 16% or more, 17% or more, or 18% or more, but it is not limited thereto.

When the polyamide-imide-based film based on a thickness of 50 μm is folded to have a radius of curvature of 3 mm, the number of folding before the fracture may be 200,000 or more.

The number of folding counts one when the film is folded to have a radius of curvature of 3 mm and then unfolded.

As the number of folding of the polyamide-imide-based film satisfies the above range, it can be advantageously applied to a foldable display device or a flexible display device.

The polyamide-imide-based film may have a surface roughness of 0.01 μm to 0.07 μm. Specifically, the surface roughness may be 0.01 μm to 0.06 μm, but it is not limited thereto.

As the surface roughness of the polyamide-imide-based film satisfies the above range, it may be advantageous for achieving luminance conditions or a sense of texture preferable for the application thereof to a display device.

The content of residual solvents in the polyamide-imide-based film may be 2,500 ppm or less. For example, the content of residual solvents may be 2,200 ppm or less, 2,000 ppm or less, 1,500 ppm or less, 1,200 ppm or less, 1,000 ppm or less, 800 ppm or less, 500 ppm or less, or 300 ppm or less, but it is not limited thereto.

The residual solvent refers to a solvent that has not been volatilized during the film production and remains in the film finally produced.

If the content of the residual solvents in the polyamide-imide-based film exceeds the above range, the durability of the film may be deteriorated, and it may have an impact on the quality variation of the film. In particular, since it affects the mechanical strength, it may adversely affect the post-processing of the film. Since the hygroscopicity of the film is accelerated, its optical properties or light resistance and thermal resistance, let alone the mechanical properties, may be deteriorated as well.

The polyamide-imide-based film according to an embodiment comprises a polyamide-imide-based polymer, which is prepared by polymerizing a diamine compound, a dianhydride compound, and a dicarbonyl compound.

The polyamide-imide-based polymer is a polymer that contains an imide repeat unit and an amide repeat unit.

Specifically, the polyamide-imide-based polymer comprises an imide repeat unit derived from the polymerization of the diamine compound and the dianhydride compound and an amide repeat unit derived from the polymerization of the diamine compound and the dicarbonyl compound.

The diamine compound is a compound that forms an imide bond with the dianhydride compound and forms an amide bond with the dicarbonyl compound, to thereby form a copolymer.

The diamine compound is not particularly limited, but it may be, for example, an aromatic diamine compound that contains an aromatic structure. For example, the diamine compound may be a compound represented by the following Formula 1.

[Formula 1] $\mathbf{H_2N\text{-}(E)_e\text{-}NH_2}$

In Formula 1, E may be selected from a substituted or unsubstituted divalent $C_6$-$C_{30}$ aliphatic cyclic group, a substituted or unsubstituted divalent $C_4$-$C_{30}$ heteroaliphatic cyclic group, a substituted or unsubstituted divalent $C_6$-$C_{30}$ aromatic cyclic group, a substituted or unsubstituted divalent $C_4$-$C_{30}$ heteroaromatic cyclic group, a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, - CH(OH)-, $-S(=O)_2-$, $-Si(CH_3)_2-$, $-C(CH_3)_2-$, and $-C(CF_3)_2-$.

e is selected from integers of 1 to 5. When e is 2 or more, the Es may be the same as, or different from, each other.

$(E)_e$ in Formula 1 may be selected from the groups represented by the following Formulae 1-1a to 1-14a, but it is not limited thereto.

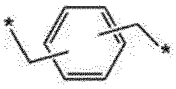
1-1a

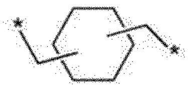
1-2a

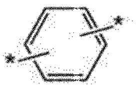
1-3a

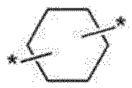
1-4a

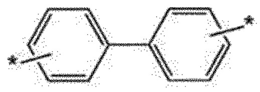
1-5a

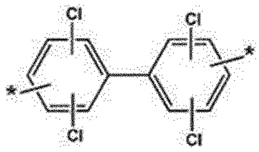
1-6a

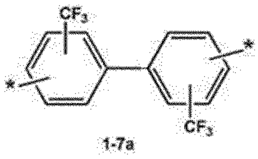
1-7a

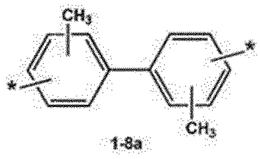
1-8a

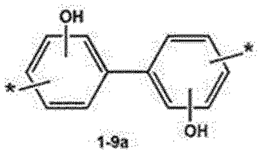
1-9a

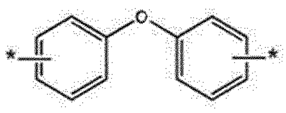
1-10a

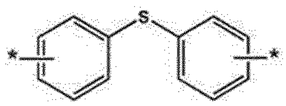
1-11a

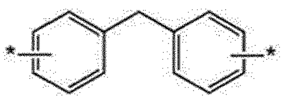
1-12a

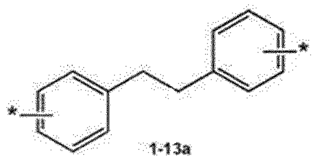
1-13a

$*-(CH_2)_n-*$

(n is selected from integers of 1 to 12)

1-14a

Specifically, $(E)_e$ in Formula 1 may be selected from the groups represented by the following Formulae 1-1b to 1-13b, but it is not limited thereto.

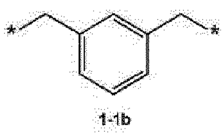
1-1b

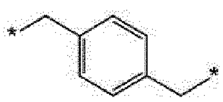
1-2b

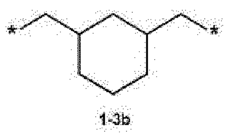
1-3b

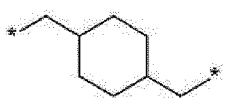
1-4b

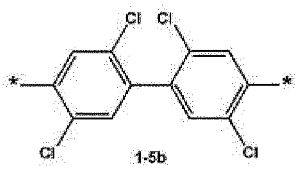
1-5b

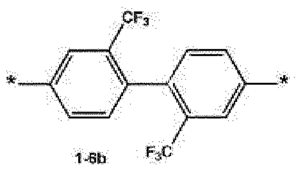
1-6b

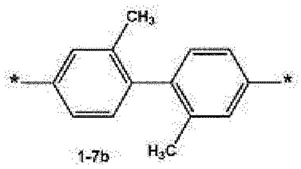
1-7b

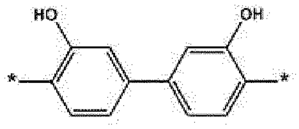

1-8b

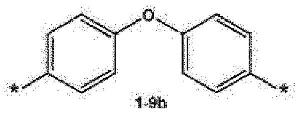

1-9b

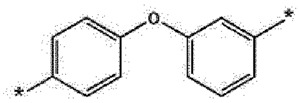

1-10b

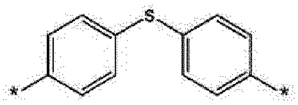

1-11b

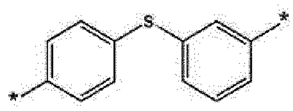

1-12b

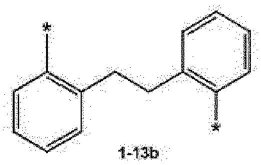

1-13b

More specifically, (E)e in Formula 1 may be the group represented by the above Formula 1-6b or the group represented by the above Formula 1-9b.

In an embodiment, the diamine compound may comprise a compound having a fluorine-containing substituent or a compound having an ether group (-O-).

The diamine compound may be composed of a compound having a fluorine-containing substituent. In such an event, the fluorine-containing substituent may be a fluorinated hydrocarbon group and specifically may be a trifluoromethyl group. But it is not limited thereto.

In some embodiments, the diamine compound may comprise one kind of diamine compound. That is, the diamine compound may be composed of a single component.

For example, the diamine compound may comprise 2,2'-bis(trifluoromethyl)-4,4'-diaminobiphenyl (TFDB) represented by the following formula, but it is not limited thereto.

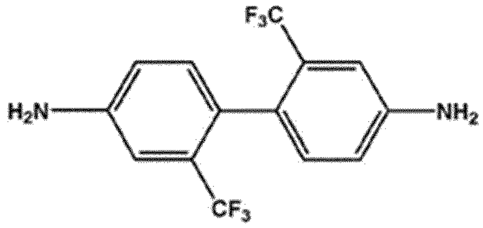

**TFDB**

The dianhydride compound has a low birefringence value, so that it can contribute to enhancements in the optical properties such as the transmittance of a film that comprises the polyamide-imide-based polymer.

The dianhydride compound is not particularly limited, but it may be, for example, an aromatic dianhydride compound that contains an aromatic structure. For example, the aromatic dianhydride compound may be a compound represented by the following Formula 2.

[Formula 2]

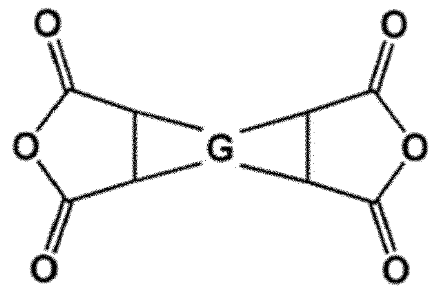

In Formula 2, G may be a group selected from a substituted or unsubstituted tetravalent $C_6$-$C_{30}$ aliphatic cyclic group, a substituted or unsubstituted tetravalent $C_4$-$C_{30}$ heteroaliphatic cyclic group, a substituted or unsubstituted tetravalent $C_6$-$C_{30}$ aromatic cyclic group, or a substituted or unsubstituted tetravalent $C_4$-$C_{30}$ heteroaromatic cyclic group, wherein the aliphatic cyclic group, the heteroaliphatic cyclic group, the aromatic cyclic group, or the heteroaromatic cyclic group may be present alone, may be fused to each other to form a condensed ring, or may be bonded by a bonding group

selected from a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, - C(=O)-, -CH(OH)-, $-S(=O)_2-$, $-Si(CH_3)_2-$, $-C(CH_3)_2-$, and $-C(CF_3)_2-$.

G in the above Formula 2 may be selected from the groups represented by the following Formulae 2-1a to 2-9a, but it is not limited thereto.

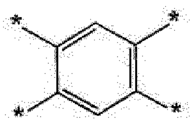

2-1a

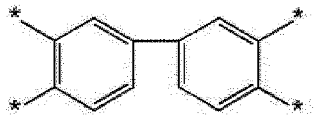

2-2a

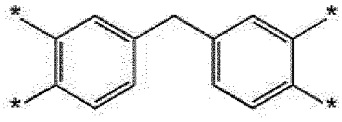

2-3a

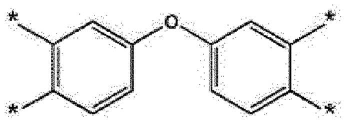

2-4a

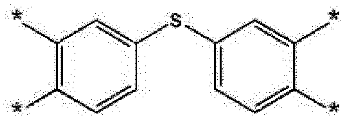

2-5a

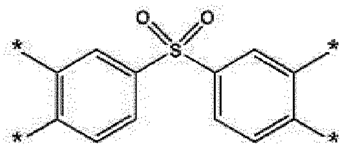

2-6a

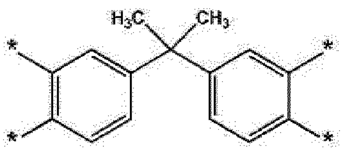

2-7a

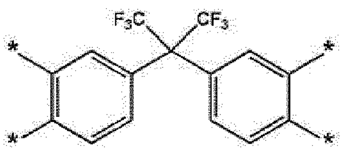

2-8a

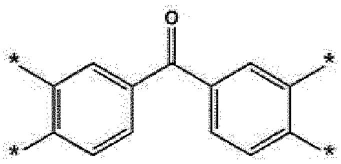

2-9a

For example, G in Formula 2 may be the group represented by the above Formula 2-2a, the group represented by the above Formula 2-8a, or the group represented by the above Formula 2-9a.

In an embodiment, the dianhydride compound may comprise a compound having a fluorine-containing substituent, a compound having a biphenyl group, or a compound having a ketone group.

The fluorine-containing substituent may be a fluorinated hydrocarbon group and specifically may be a trifluoromethyl group. But it is not limited thereto.

In another embodiment, the dianhydride compound may be composed of a single component or a mixture of two components.

For example, the dianhydride compound may comprise at least one selected from the group consisting of 2,2'-bis-(3,4-dicarboxyphenyl)hexafluoropropane dianhydride (6FDA) and 3,3',4,4'-biphenyltetracarboxylic dianhydride (BPDA), which have the following structures, but it is not limited thereto.

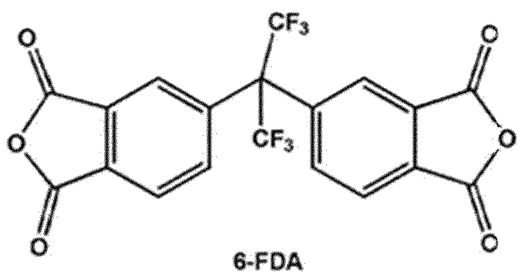

6-FDA

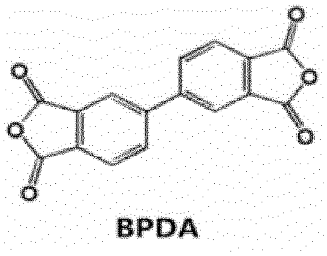

BPDA

The diamine compound and the dianhydride compound may be polymerized to form a polyamic acid.

Subsequently, the polyamic acid may be converted to a polyimide through a dehydration reaction, and the polyimide comprises an imide repeat unit.

The polyimide may form a repeat unit represented by the following Formula A.

[Formula A]

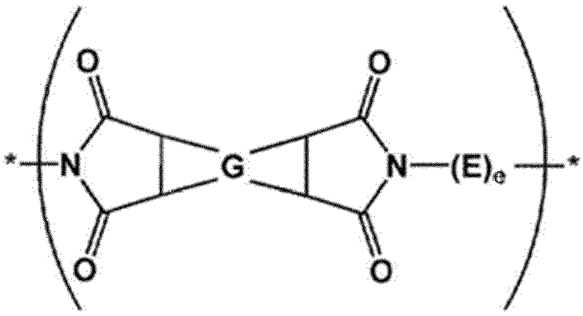

In Formula A, E, G, and e are as described above.

For example, the polyimide may comprise a repeat unit represented by the following Formula A-1, but it is not limited thereto.

[Formula A-1]

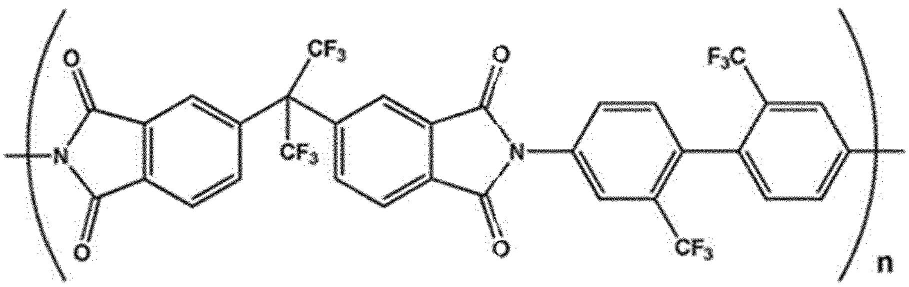

In Formula A-1, n is an integer of 1 to 400.

The dicarbonyl compound is not particularly limited, but it may be, for example, a compound represented by the following Formula 3.

[Formula 3]

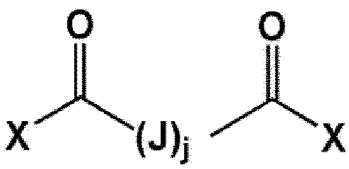

In Formula 3, J may be selected from a substituted or unsubstituted divalent $C_6$-$C_{30}$ aliphatic cyclic group, a substituted or unsubstituted divalent $C_4$-$C_{30}$ heteroaliphatic cyclic group, a substituted or unsubstituted divalent $C_6$-$C_{30}$

aromatic cyclic group, a substituted or unsubstituted divalent $C_4$-$C_{30}$ heteroaromatic cyclic group, a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, - CH(OH)-, $-S(=O)_2-$, $-Si(CH_3)_2-$, $-C(CH_3)_2-$, and $-C(CF_3)_2-$.

j is selected from integers of 1 to 5. When j is 2 or more, the Js may be the same as, or different from, each other.

X is a halogen atom. Specifically, X may be F, Cl, Br, I, or the like. More specifically, X may be Cl, but it is not limited thereto.

$(J)_j$ in the above Formula 3 may be selected from the groups represented by the following Formulae 3-1a to 3-14a, but it is not limited thereto.

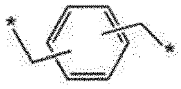
3-1a
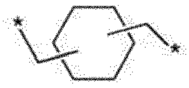
3-2a
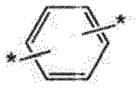
3-3a
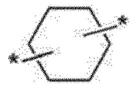
3-4a
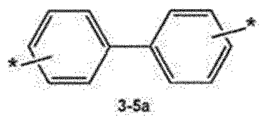
3-5a

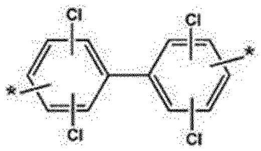
3-6a
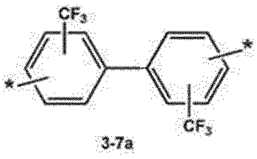
3-7a
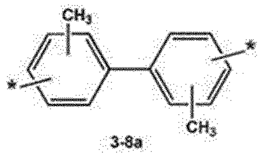
3-8a

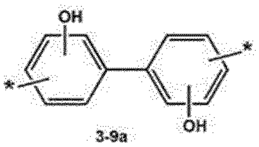
3-9a
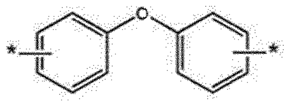
3-10a
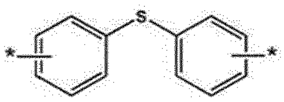
3-11a

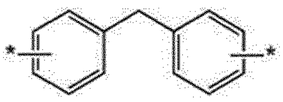
3-12a
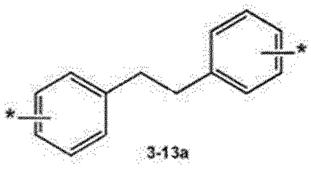
3-13a

$*-(CH_2)_n-*$

(n is selected from integers of 1 to 12)

3-14a

Specifically, $(J)_j$ in the above Formula 3 may be selected from the groups represented by the following Formulae 3-1b to 3-8b, but it is not limited thereto.

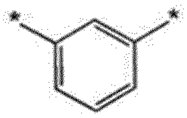
3-1b
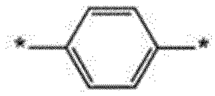
3-2b
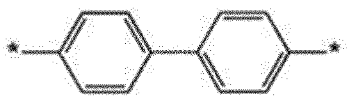
3-3b

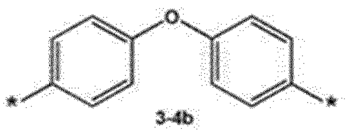
3-4b
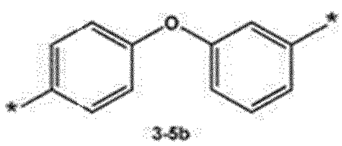
3-5b

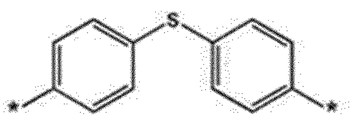
3-6b
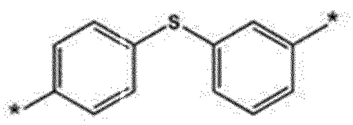
3-7b
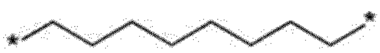
3-8b

More specifically, $(J)_j$ in Formula 3 may be the group represented by the above Formula 3-1b, the group represented by the above Formula 3-2b, the group represented by the above Formula 3-3b, or the group represented by

the above Formula 3-8b.

For example, $(J)_j$ in the above Formula 3 may be the group represented by the above Formula 3-1b or the group represented by the above Formula 3-2b.

In an embodiment, one kind of a dicarbonyl compound may be used alone, or a mixture of at least two kinds of dicarbonyl compounds different from each other may be used, as the dicarbonyl compound. If two or more dicarbonyl compounds are used, at least two dicarbonyl compounds in which $(J)_j$ in the above Formula 3 is selected from the groups represented by the above Formulae 3-1b to 3-8b may be used as the dicarbonyl compound.

In another embodiment, the dicarbonyl compound may be an aromatic dicarbonyl compound that contains an aromatic structure.

The dicarbonyl compound may comprise terephthaloyl chloride (TPC), 1,1'-biphenyl-4,4'-dicarbonyl dichloride (BPDC), isophthaloyl chloride (IPC), as represented by the following formulae, or a combination thereof. But it is not limited thereto.

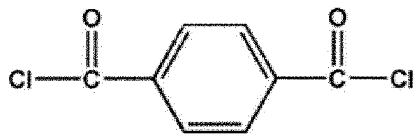

TPC

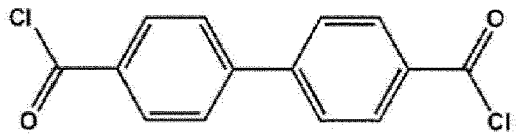

BPDC

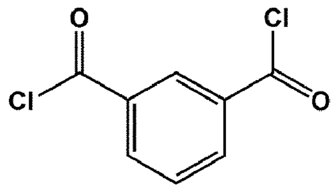

IPC

The diamine compound and the dicarbonyl compound may be polymerized to form a repeat unit represented by the following Formula B.

[Formula B]

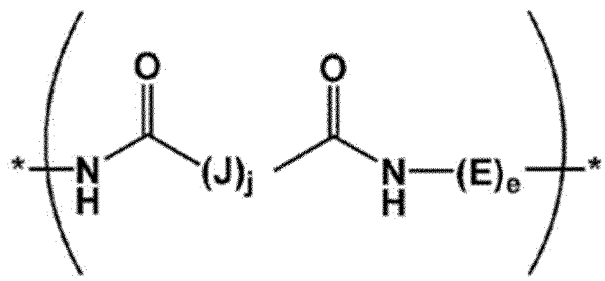

In Formula B, E, J, e, and j are as described above.

For example, the diamine compound and the dicarbonyl compound may be polymerized to form amide repeat units represented by the following Formulae B-1 and B-2.

Alternatively, the diamine compound and the dicarbonyl compound may be polymerized to form amide repeat units represented by the following Formulae B-2 and B-3.

[Formula B-1]

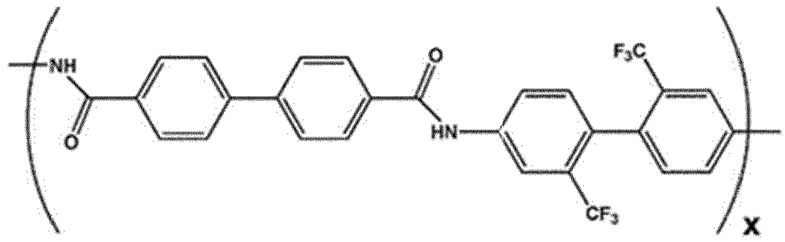

In Formula B-1, x is an integer of 1 to 400.

[Formula B-2]

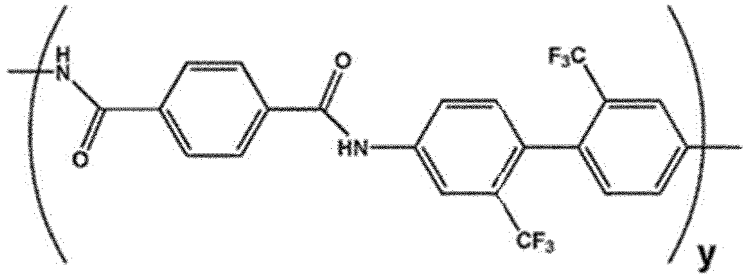

In Formula B-2, y is an integer of 1 to 400.

[Formula B-3]

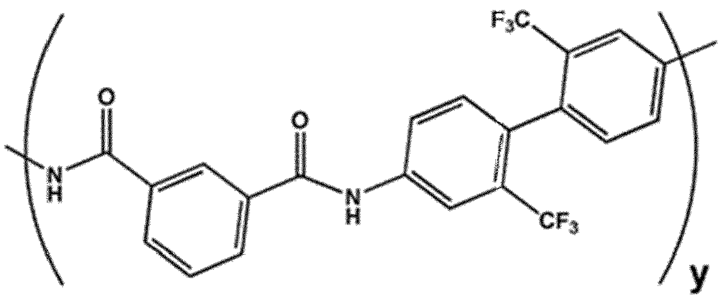

In Formula B-3, y is an integer of 1 to 400.

According to an embodiment, the polyamide-imide-based polymer may comprise a repeat unit represented by the following Formula A and a repeat unit represented by the following Formula B:

[Formula A]

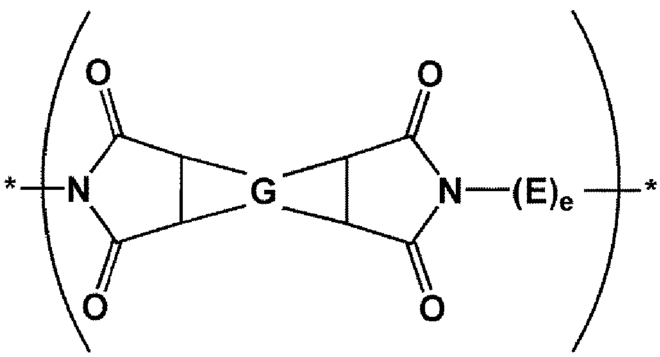

[Formula B]

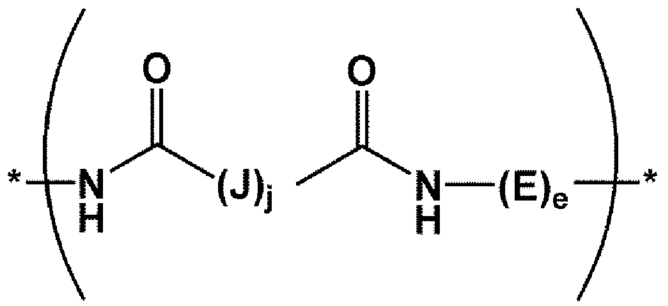

In Formulae A and B, E and J are each independently selected from a substituted or unsubstituted divalent $C_6$-$C_{30}$ aliphatic cyclic group, a substituted or unsubstituted divalent $C_4$-$C_{30}$ heteroaliphatic cyclic group, a substituted or unsubstituted divalent $C_6$-$C_{30}$ aromatic cyclic group, a substituted or unsubstituted divalent $C_4$-$C_{30}$ heteroaromatic cyclic group, a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, -CH(OH)-, $-S(=O)_2-$, $-Si(CH_3)_2-$, $-C(CH_3)_2-$, and $-C(CF_3)_2-$,

e and j are each independently selected from integers of 1 to 5,
when e is 2 or more, then the two or more Es are the same as, or different from, each other,
when j is 2 or more, then the two or more Js are the same as, or different from, each other,
G is a substituted or unsubstituted tetravalent $C_6$-$C_{30}$ aliphatic cyclic group, a substituted or unsubstituted tetravalent $C_4$-$C_{30}$ heteroaliphatic cyclic group, a substituted or unsubstituted tetravalent $C_6$-$C_{30}$ aromatic cyclic group, or a substituted or unsubstituted tetravalent $C_4$-$C_{30}$ heteroaromatic cyclic group, wherein the aliphatic cyclic group, the heteroaliphatic cyclic group, the aromatic cyclic group, or the heteroaromatic cyclic group is present alone, fused to each other to form a condensed ring, or bonded by a bonding group selected from a substituted or unsubstituted $C_1$-$C_{30}$ alkylene group, a substituted or unsubstituted $C_2$-$C_{30}$ alkenylene group, a substituted or unsubstituted $C_2$-$C_{30}$ alkynylene group, -O-, -S-, -C(=O)-, -CH(OH)-, $-S(=O)_2-$, $-Si(CH_3)_2-$, $-C(CH_3)_2-$, and $-C(CF_3)_2-$.

The polyamide-imide-based polymer may comprise an imide-based repeat unit and an amide-based repeat unit at a molar ratio of 2:98 to 70:30. Specifically, the molar ratio of the imide repeat unit to the amide repeat unit may be 2:98 to 60:40, 2:98 to 55:45, 2:98 to 50:50, 5:95 to 70:30, 5:95 to 60:40, 5:95 to 55:45, 5:95 to 50:50, or 10:90 to 40:60, but it is not limited thereto.

If the molar ratio of the imide repeat unit to the amide repeat unit is within the above range, the quality reliability of a film can be enhanced in association with a characteristic processing method, and excellent optical properties and solvent resistance can be achieved.

In the polyamide-imide-based polymer, the molar ratio of the repeat unit represented by the above Formula A to the repeat unit represented by the above Formula B may be 2:98 to 70:30. Specifically, the molar ratio of the repeat unit represented by Formula A to the repeat unit represented by Formula B may be 2:98 to 60:40, 2:98 to 55:45, 2:98 to 50:50, 5:95 to 70:30, 5:95 to 60:40, 5:95 to 55:45, 5:95 to 50:50, or 10:90 to 40:60, but it is not limited thereto.

The polyamide-imide-based film according to an embodiment may further comprise at least one selected from the group consisting of a filler, a blue pigment, and a UVA absorber in addition to the polyamide-imide-base polymer and the alcohol-based supplement.

The filler may comprise, for example, an oxide, a carbonate, or a sulfate of metal or metalloid. For example, the filler may comprise silica, calcium carbonate, barium sulfate, or the like, but it is not limited thereto.

The filler may be employed in the form of particles. In addition, the surface of the filler is not subjected to special coating treatment, and it may be uniformly dispersed in the entire film.

As the polyamide-imide-based film comprises the filler, it is possible to secure a wide angle of view without a deterioration in the optical properties of the film and to enhance not only the roughness and winderability but also the effect of improving --the scratches caused by sliding-- in the preparation of the film.

The filler may have a refractive index of 1.55 to 1.75. Specifically, the refractive index of the filler may be 1.60 to 1.75, 1.60 to 1.70, 1.60 to 1.68, or 1.62 to 1.65, but it is not limited thereto.

If the refractive index of the filler satisfies the above range, the birefringence values related to the x-direction refractive index (nx), y-direction refractive index (ny), and z-direction refractive index (nz) can be appropriately adjusted, and the luminance of the film at various angles can be improved.

On the other hand, if the refractive index of the filler is outside the above range, there may arise a problem in that

the filler is visually noticeable on the film or that the haze is increased due to the filler.

The content of the filler may be 100 ppm to 15,000 ppm based on the total weight of the solids content of the polyamide-imide-based polymer. Specifically, the content of the filler may be 100 ppm to 14,500 ppm, 100 ppm to 14,200 ppm, 200 ppm to 14,500 ppm, 200 ppm to 14,200 ppm, 250 ppm to 14,100 ppm, or 300 ppm to 14,000 ppm, based on the total weight of the solids content of the polyamide-imide-based polymer, but it is not limited thereto.

If the content of the filler is outside the above range, the haze of the film is steeply increased, and the filler may aggregate with each other on the surface of the film, so that a feeling of foreign matter may be visually observed, or it may cause a trouble in the sliding performance or deteriorate the windability in the preparation process.

In some embodiments, the blue pigment may be employed in an amount of 50 to 5,000 ppm based on the total weight of the polyamide-imide-based polymer. Preferably, the blue pigment may be employed in an amount of 100 to 5,000 ppm, 200 to 5,000 ppm, 300 to 5,000 ppm, 400 to 5,000 ppm, 50 to 3,000 ppm, 100 to 3,000 ppm, 200 to 3,000 ppm, 300 to 3,000 ppm, 400 to 3,000 ppm, 50 to 2,000 ppm, 100 to 2,000 ppm, 200 to 2,000 ppm, 300 to 2,000 ppm, 400 to 2,000 ppm, 50 to 1,000 ppm, 100 to 1,000 ppm, 200 to 1,000 ppm, 300 to 1,000 ppm, or 400 to 1,000 ppm, based on the total weight of the polyamide-imide-based polymer, but it is not limited thereto.

The UVA absorber may comprise an absorber that absorbs electromagnetic waves of a wavelength of 10 to 400 nm used in the art. For example, the UVA absorber may comprise a benzotriazole-based compound. The benzotriazole-based compound may comprise an N-phenolic benzotriazole-based compound. In some embodiments, the N-phenolic benzotriazole-based compound may comprise N-phenolic benzotriazole in which the phenol group is substituted with an alkyl group having 1 to 10 carbon atoms. It may be substituted with two or more of the alkyl group, which may be linear, branched, or cyclic.

In some embodiments, the UVA absorber may be employed in an amount of 0.1 to 10% by weight based on the total weight of the polyamide-imide-based polymer. Preferably, the UVA absorber may be employed in an amount of 0.1 to 5% by weight, 0.1 to 3% by weight, 0.1 to 2% by weight, 0.5 to 10% by weight, 0.5 to 5% by weight, 0.5 to 3% by weight, 0.5 to 2% by weight, 1 to 10% by weight, 1 to 5% by weight, 1 to 3% by weight, or 1 to 2% by weight, relative to the total weight of the polyamide-imide-based polymer, but it is not limited thereto.

The physical properties of the polyamide-imide-based film as described above are based on a thickness of 40 μm to 80 μm. For example, the physical properties of the polyamide-imide-based film are based on a thickness of 50 μm.

The features on the components and properties of the polyamide-imide-based film as described above may be combined with each other.

In addition, the content of the alcohol-based supplement or the like in the polyamide-imide-based film may be adjusted by not only the amount of the alcohol-based supplement added in the polymerization process but also the combinations of the chemical and physical properties of the components, which constitute the polyamide-imide-based film, along with the specific conditions in each step of the process for preparing the polyamide-imide-based film as described below.

## Cover window for a display device

The cover window for a display device according to an embodiment comprises a polyamide-imide-based film as defined herein and a functional layer.

The polyamide-imide-based film comprises a polyamide-imide-based polymer and an alcohol-based supplement.

Details on the polyamide-imide-based film are as described above.

The cover window for a display device can be advantageously applied to a display device.

## Display device

The display device according to an embodiment comprises a display unit; and a cover window disposed on the display unit, wherein the cover window comprises a polyamide-imide-based film as defined herein and a functional layer.

The polyamide-imide-based film comprises a polyamide-imide-based polymer and an alcohol-based supplement.

Details on the polyamide-imide-based film and the cover window are as described above.

Fig. 1 is a schematic exploded view of a display device according to an embodiment. Fig. 2 is a schematic perspective view of a display device according to an embodiment. Fig. 3 is a schematic cross-sectional view of a display device according to an embodiment.

Specifically, Figs. 1 to 3 illustrate a display device, which comprises a display unit (400) and a cover window (300) disposed on the display unit (400), wherein the cover window comprises a polyamide-imide-based film (100) having a first side (101) and a second side (102) and a functional layer (200), and an adhesive layer (500) is interposed between the display unit (400) and the cover window (300).

The display unit (400) is for displaying an image, and it may have flexible characteristics.

The display unit (400) may be a display panel for displaying an image. For example, it may be a liquid crystal display panel or an organic electroluminescent display panel. The organic electroluminescent display panel may comprise a front polarizing plate and an organic EL panel.

The front polarizing plate may be disposed on the front side of the organic EL panel. Specifically, the front polarizing plate may be attached to the side on which an image is displayed in the organic EL panel.

The organic EL panel may display an image by self-emission of a pixel unit. The organic EL panel may comprise an organic EL substrate and a driving substrate. The organic EL substrate may comprise a plurality of organic electroluminescent units, each of which corresponds to a pixel. Specifically, it may comprise a cathode, an electron transport layer, a light-emitting layer, a hole transport layer, and an anode. The driving substrate is operatively coupled to the organic EL substrate. That is, the driving substrate may be coupled to the organic EL substrate so as to apply a driving signal such as a driving current, so that the driving substrate can drive the organic EL substrate by applying a current to the respective organic electroluminescent units.

In addition, an adhesive layer (500) may be interposed between the display unit (400) and the cover window (300). The adhesive layer may be an optically transparent adhesive layer, but it is not particularly limited.

The cover window (300) may be disposed on the display unit (400). The cover window is located at the outer position of the display device to thereby protect the display unit.

The cover window (300) may comprise a polyamide-imide-based film and a functional layer. The functional layer may be at least one selected from the group consisting of a hard coating layer, a reflectance reducing layer, an antifouling layer, and an antiglare layer. The functional layer may be coated on at least one side of the polyamide-imide-based film.

The polyamide-imide-based film according to an embodiment can be applied in the form of a film to the outside of a display device without changing the display driving method, the color filter inside the panel, or the laminated structure, thereby providing a display device having a uniform thickness, low haze, high transmittance, and high transparency. Since neither significant process changes nor cost increases are needed, it is advantageous in that the production costs can be reduced.

The polyamide-imide-based film according to an embodiment may be excellent in optical properties in terms of high transmittance, low haze, and low yellow index, as well as may have excellent mechanical properties such as modulus and flexibility, and the change (deterioration) of its optical and mechanical properties can be suppressed when it is exposed to UV rays.

Specifically, a polyamide-imide-based film comprising an alcohol-based supplement, as described herein, can have excellent optical properties and solvent resistance. As a result, when the polyamide-imide-based film is applied to a cover window for a display device or to a display device, the quality reliability and product yield of a final product can be enhanced.

## Process for preparing a polyamide-imide-based film

An embodiment provides a process for preparing a polyamide-imide-based film.

The process for preparing a polyamide-imide-based film according to the invention comprises polymerizing a diamine compound, a dianhydride compound, and a dicarbonyl compound in an organic solvent to prepare a polyamide-imide-based polymer solution (S100); casting the solution and then drying it to prepare a gel sheet (S200); and thermally treating the gel sheet (S300) (see Fig. 4). The step of preparing the polyamide-imide-based polymer solution comprises adding an alcohol-based supplement, wherein the alcohol-based supplement comprises an aliphatic alcohol substituted with an alkyl group and an unsubstituted aliphatic alcohol, the content of the aliphatic alcohol substituted with an alkyl group is 5 to 500 ppm based on the total weight of the film, and the content of the unsubstituted aliphatic alcohol is 5 to 500 ppm based on the total weight of the film.

The process for preparing a polyamide-imide-based film according to some embodiments may further comprise adjusting the viscosity of the polyamide-imide-based polymer solution (S110), aging the polyamide-imide-based polymer solution (S120), and/or degassing the polyamide-imide-based polymer solution (S130).

The polyamide-imide-based film is a film in which a polyamide-imide-based polymer is a main component. The polyamide-imide-based polymer is a resin that comprises an imide repeat unit and an amide repeat unit at a predetermined molar ratio as a structural unit.

In the process for preparing a polyamide-imide-based film, a polymer solution for preparing the polyamide-imide-based polymer may be prepared by simultaneously or sequentially mixing a diamine compound, a dianhydride compound, and a dicarbonyl compound in an organic solvent in a reactor, and reacting the mixture (S100).

In an embodiment, the polymer solution may be prepared by simultaneously mixing and reacting a diamine compound, a dianhydride compound, and a dicarbonyl compound in an organic solvent.

In another embodiment, the step of preparing the polymer solution may comprise first mixing and reacting the diamine compound and the dianhydride compound in a solvent to produce a polyamic acid (PAA) solution; and second

mixing and reacting the polyamic acid (PAA) solution and the dicarbonyl compound to form an amide bond and an imide bond. The polyamic acid solution is a solution that comprises a polymer containing an amic acid repeat unit.

Alternatively, the step of preparing the polymer solution may comprise first mixing and reacting the diamine compound and the dianhydride compound in a solvent to produce a polyamic acid solution; subjecting the polyamic acid solution to dehydration to produce a polyimide (PI) solution; and second mixing and reacting the polyimide (PI) solution and the dicarbonyl compound to further form an amide bond. The polyimide solution is a solution that comprises a polymer having an imide repeat unit.

In still another embodiment, the step of preparing the polymer solution may comprise first mixing and reacting the diamine compound and the dicarbonyl compound in a solvent to produce a polyamide (PA) solution; and second mixing and reacting the polyamide (PA) solution and the dianhydride compound to further form an imide bond. The polyamide solution is a solution that comprises a polymer having an amide repeat unit.

The polymer solution thus prepared may be a solution that comprises a polymer containing at least one selected from the group consisting of a polyamic acid (PAA) repeat unit, a polyamide (PA) repeat unit, and a polyimide (PI) repeat unit.

Alternatively, the polymer contained in the polymer solution comprises an imide repeat unit derived from the polymerization of the diamine compound and the dianhydride compound and an amide repeat unit derived from the polymerization of the diamine compound and the dicarbonyl compound.

Details on the diamine compound, the dianhydride compound, and the dicarbonyl compound are as described above.

The step of preparing the polymer solution comprises adding an alcohol-based supplement.

The alcohol-based supplement comprises an aliphatic alcohol substituted with an alkyl group and an unsubstituted aliphatic alcohol. The content of the aliphatic alcohol substituted with an alkyl group is 5 to 500 ppm based on the total weight of the film, and the content of the unsubstituted aliphatic alcohol is 5 to 500 ppm based on the total weight of the film. The alcohol-based supplements may be added simultaneously or sequentially.

Specifically, the addition of the alcohol-based supplement may be carried out simultaneously with the addition of a diamine compound, a dianhydride compound, and/or a dicarbonyl compound. Alternatively, the step of adding the alcohol-based supplement may be carried out after the step of preparing a polyamic acid (PAA) solution, the step of preparing a polyimide (PI) solution, or the step of preparing a polyamide (PA) solution, but it is not limited thereto.

For example, the step of preparing the polymer solution may comprise adding a diamine compound to a solvent; adding a dianhydride compound and stirring it; adding an alcohol-based supplement; and adding a dicarbonyl compound and stirring it.

In addition, in the step of preparing the polymer solution, the steps of adding a diamine compound to a solvent; adding a dianhydride compound and stirring it; adding an alcohol-based supplement; and adding a dicarbonyl compound and stirring it may be sequentially carried out, but it is not limited thereto.

Alternatively, in the step of preparing the polymer solution, the steps of adding an alcohol-based supplement to a solvent; adding a diamine compound; adding a dianhydride compound and stirring it; and adding a dicarbonyl compound and stirring it may be sequentially carried out, but it is not limited thereto.

Details on the alcohol-based supplement are as described above.

The content of solids contained in the polymer solution may be 10% by weight to 30% by weight. Alternatively, the content of solids contained in the polymer solution may be 15% by weight to 25% by weight, but it is not limited thereto.

If the content of solids contained in the polymer solution is within the above range, a polyamide-imide-based film can be effectively produced in the extrusion and casting steps. In addition, the polyamide-imide-based film thus produced may have excellent optical properties and solvent resistance.

In another embodiment, the step of preparing the polymer solution may further comprise introducing a catalyst.

Here, the catalyst may comprise at least one selected from the group consisting of beta picoline, acetic anhydride, isoquinoline (IQ), and pyridine-based compounds, but it is not limited thereto.

The catalyst may be added in an amount of 0.01 to 0.5 molar equivalent, 0.01 to 0.4 molar equivalent, or 0.01 to 0.3 molar equivalent, based on 1 mole of the polyamic acid, but it is not limited thereto.

The further addition of the catalyst may expedite the reaction rate and enhance the chemical bonding force between the repeat unit structures or that within the repeat unit structures.

In an embodiment, the step of preparing the polymer solution may further comprise adjusting the viscosity of the polymer solution (S110). The viscosity of the polymer solution may be 80 Pa-s to 500 Pa-s (80,000 cps to 500,000 cps), 100 Pa-s to 500 Pa-s (100,000 cps to 500,000 cps), 150 Pa-s to 500 Pa-s (150,000 cps to 500,000 cps), 150 Pa-s to 450 Pa-s (150,000 cps to 450,000 cps), 200 Pa-s to 450 Pa-s (200,000 cps to 450,000 cps), 200 Pa-s to 400 Pa-s (200,000 cps to 400,000 cps), 200 Pa-s to 350 Pa-s (200,000 cps to 350,000 cps), or 250 Pa-s to 350 Pa-s (250,000 cps to 350,000 cps) at room temperature. In such an event, the film-forming capability of a polyamide-imide-based film can be enhanced, thereby enhancing the thickness uniformity.

Specifically, the step of preparing the polymer solution may comprise simultaneously or sequentially mixing and

reacting a diamine compound, a dianhydride compound, and a dicarbonyl compound in an organic solvent to prepare a first polymer solution; and further adding the dicarbonyl compound to prepare a second polymer solution having the target viscosity.

In the steps of preparing the first polymer solution and the second polymer solution, the polymer solutions have viscosities different from each other. For example, the second polymer solution has a viscosity higher than that of the first polymer solution.

Specifically, the viscosity of the polymer solution may be measured using BH-II equipment of TOKI SANGYO under constant temperature conditions at 25°C with RPM set to 4 and spindle number 4.

In the steps of preparing the first polymer solution and the second polymer solution, the stirring speeds may be different from each other. For example, the stirring speed when the first polymer solution is prepared may be faster than the stirring speed when the second polymer solution is prepared.

In still another embodiment, the step of preparing the polymer solution may further comprise adjusting the pH of the polymer solution. In this step, the pH of the polymer solution may be adjusted to 4 to 7, for example, 4.5 to 7.

The pH of the polymer solution may be adjusted by adding a pH adjusting agent. The pH adjusting agent is not particularly limited and may include, for example, aminebased compounds such as alkoxyamine, alkylamine, and alkanolamine.

As the pH of the polymer solution is adjusted to the above range, it is possible to prevent the occurrence of defects in a film produced from the polymer solution and to achieve the desired optical properties and mechanical properties in terms of yellow index and modulus.

The pH adjusting agent may be employed in an amount of 0.1% by mole to 10% by mole based on the total number of moles of monomers in the polymer solution.

In an embodiment, the organic solvent may be at least one selected from the group consisting of dimethylformamide (DMF), dimethylacetamide (DMAc), N-methyl-2-pyrrolidone (NMP), m-cresol, tetrahydrofuran (THF), and chloroform. The organic solvent employed in the polymer solution may be dimethylacetamide (DMAc), but it is not limited thereto.

In another embodiment, at least one selected from the group consisting of a filler, a blue pigment, and a UVA absorber may be added to the polymer solution.

Details on the types and contents of the filler, blue pigment, and UVA absorber are as described above. The filler, blue pigment, and UVA absorber may be mixed with the polyamide-imide-based polymer in the polymer solution.

The polymer solution may be stored at -20°C to 20°C, -20°C to 10°C, -20°C to 5°C, -20°C to 0°C, or 0°C to 10°C.

If it is stored at the above temperature, it is possible to prevent degradation of the polymer solution and to lower the moisture content to thereby prevent defects of a film produced therefrom.

In some embodiments, the polymer solution or the polymer solution whose viscosity has been adjusted may be aged (S120).

The aging may be carried out by leaving the polymer solution at a temperature of -10 to 10°C for 24 hours or longer. In such an event, the polyamide-imide-based polymer or unreacted materials contained in the polymer solution, for example, may complete the reaction or achieve chemical equilibrium, whereby the polymer solution may be homogenized. The mechanical properties and optical properties of a polyamide-imide-based film formed therefrom may be substantially uniform over the entire area of the film. Preferably, the aging may be carried out at a temperature of -5 to 10°C, -5 to 5°C, or -3 to 5°C, but it is not limited thereto.

In an embodiment, the process may further comprise degassing the polyamide-imide-based polymer solution (S130). The step of degassing may remove moisture in the polymer solution and reduce impurities, thereby increasing the reaction yield and imparting excellent surface appearance and mechanical properties to the film finally produced.

The degassing may comprise vacuum degassing or purging with an inert gas.

The vacuum degassing may be carried out for 30 minutes to 3 hours after depressurizing the internal pressure of the tank in which the polymer solution is contained to 0.1 bar to 0.7 bar. The vacuum degassing under these conditions may reduce bubbles in the polymer solution. As a result, it is possible to prevent surface defects of a film produced therefrom and to achieve excellent optical properties such as haze.

In addition, the purging may be carried out by purging the tank with an inert gas at an internal pressure of 1 atm to 2 atm. The purging under these conditions may remove moisture in the polymer solution, reduce impurities to thereby increase the reaction yield, and achieve excellent optical properties such as haze and mechanical properties.

The inert gas may be at least one selected from the group consisting of nitrogen, helium (He), neon (Ne), argon (Ar), krypton (Kr), xenon (Xe), and radon (Rn), but it is not limited thereto. Specifically, the inert gas may be nitrogen.

The vacuum degassing and the purging with an inert gas may be carried out in separate steps.

For example, the step of vacuum degassing may be carried out, followed by the step of purging with an inert gas, but it is not limited thereto.

The vacuum degassing and/or the purging with an inert gas may improve the physical properties of the surface of a polyamide-imide-based film thus produced.

The polymer solution is cast to prepare a gel sheet (S200).

For example, the polymer solution may be extruded, coated, and/or dried on a support to form a gel sheet.

In addition, the casting thickness of the polymer solution may be 200 μm to 700 μm. As the polymer solution is cast to a thickness within the above range, the final film produced after the drying and thermal treatment may have an appropriate and uniform thickness.

The polymer solution may have a viscosity of 150 Pa-s to 500 Pa-s (150,000 cps to 500,000 cps) at room temperature as described above. As the viscosity satisfies the above range, the polymer solution can be cast to a uniform thickness without defects, and a polyamide-imide-based film having a substantially uniform thickness can be formed without local/partial thickness variations during drying.

The polymer solution is cast and then dried at a temperature of 60°C to 150°C, 70°C to 150°C, 80°C to 150°C, or 90°C to 150°C, for 5 minutes to 60 minutes to prepare a gel sheet. Specifically, the polymer solution is dried at a temperature of 90°C to 140°C for 15 minutes to 40 minutes to prepare a gel sheet.

The solvent of the polymer solution may be partially or totally volatilized during the drying to prepare the gel sheet.

The dried gel sheet is thermally treated to form a polyamide-imide-based film (S300).

The thermal treatment of the gel sheet may be carried out, for example, through a thermosetting device.

The step of thermally treating the gel sheet comprises thermal treatment through at least one heater.

In addition, the step of thermally treating the gel sheet may further comprise thermal treatment with hot air.

In an embodiment, the step of thermally treating the gel sheet may comprise thermal treatment with hot air; and thermal treatment through at least one heater.

In an embodiment, if the thermal treatment with hot air is carried out, heat may be uniformly supplied. If heat is not uniformly supplied, a satisfactory surface roughness cannot be achieved, or the surface quality may not be uniform, and the surface energy may be raised or lowered too much.

The thermal treatment with hot air may be carried out in a temperature range of 60°C to 500°C for 5 minutes to 200 minutes. Specifically, the thermal treatment of the gel sheet may be carried out in a temperature range of 80°C to 300°C at a temperature elevation rate of 1.5°C/minute to 20°C/minute for 10 minutes to 150 minutes. More specifically, the thermal treatment of the gel sheet may be carried out in a temperature range of 140°C to 250°C.

In such an event, the initial temperature of the thermal treatment of the gel sheet by hot air may be 60°C or higher. Specifically, the initial temperature of the thermal treatment of the gel sheet may be 80°C to 180°C. In addition, the maximum temperature in the thermal treatment may be 200°C to 500°C.

In addition, the thermal treatment of the gel sheet may be carried out in two or more stages. Specifically, the thermal treatment of the gel sheet with hot air may be carried out sequentially in a first hot air treatment stage and a second hot air treatment stage. The temperature in the second hot air treatment stage may be higher than the temperature in the first hot air treatment stage.

In an embodiment, the step of thermally treating the gel sheet may comprise second thermal treatment through at least one heater, specifically, thermal treatment through a plurality of heaters.

The plurality of heaters may comprise a plurality of heaters spaced apart from each other in the transverse direction (TD direction) of the gel sheet. The plurality of heaters may be mounted on a heater mounting part, and two or more heater mounting parts may be disposed along the moving direction (MD direction) of the gel sheet.

The at least one heater may comprise an IR heater. However, the type of the at least one heater is not limited to the above example and may be variously changed. Specifically, the plurality of heaters may each comprise an IR heater.

The thermal treatment by the at least one heater may be carried out in a temperature range of 250°C or higher. Specifically, the thermal treatment by the at least one heater may be carried out for 1 minute to 30 minutes or 1 minute to 20 minutes in a temperature range of 250°C to 400°C.

In the thermal treatment with a heater, the temperature stated above is the temperature in the thermal treatment device in which the gel sheet is present. It corresponds to a temperature measured by a temperature sensor located in the second thermal treatment section of the thermal treatment device.

Subsequently, after the step of thermal treatment of the gel sheet, a step of cooling the cured film may be carried out while it is moved.

The step of cooling the cured film while it is transferred may comprise a first temperature lowering step of lowering the temperature at a rate of 100°C/minute to 1,000°C/minute and a second temperature lowering step of lowering the temperature at a rate of 40°C/minute to 400°C/minute.

In such an event, specifically, the second temperature lowering step is performed after the first temperature lowering step. The temperature lowering rate of the first temperature lowering step may be faster than the temperature lowering rate of the second temperature lowering step.

For example, the maximum rate of the first temperature lowering step is faster than the maximum rate of the second temperature lowering step. Alternatively, the minimum rate of the first temperature lowering step is faster than the minimum rate of the second temperature lowering step.

If the step of cooling the cured film is carried out in such a multistage manner, it is possible to have the physical

properties of the cured film further stabilized and to maintain the optical properties and mechanical properties of the film achieved during the curing step more stably for a long period of time.

In addition, a step of winding the cooled cured film using a winder may be carried out.

In such an event, the ratio of the moving speed of the gel sheet on the belt at the time of drying to the moving speed of the cured film at the time of winding is 1:0.95 to 1:1.40. Specifically, the ratio of the moving speeds may be 1:0.99 to 1:1.20, 1:0.99 to 1:1.10, or 1: 1.0 to 1:1.05, but it is not limited thereto.

If the ratio of the moving speeds is outside the above range, the mechanical properties of the cured film may be impaired, and the flexibility and elastic properties may be deteriorated.

In the process for preparing a polyamide-imide-based film, the thickness deviation (%) according to the following Equation 1 may be 3% to 30%. Specifically, the thickness deviation (%) may be 5% to 20%, but it is not limited thereto.

$$\text{[Equation 1] Thickness variation (\%)} = (M1 - M2)/M2 \times 100$$

[Equation 1]

In Equation 1, M1 is the thickness (μm) of the gel sheet, and M2 is the thickness (μm) of the cooled cured film at the time of winding.

The polyamide-imide-based film is prepared by the preparation process as described above such that it is excellent in optical and mechanical properties, as well as solvent resistance. The polyamide-imide-based film may be applicable to various uses that require transparency. For example, the polyamide-imide-based film may be applied to not only display devices but also solar cells, semiconductor devices, sensors, and the like.

Details on the polyamide-imide-based film prepared by the process for preparing a polyamide-imide film are as described above.

**Embodiments for Carrying Out the Invention**

Hereinafter, the above description will be described in detail by referring to examples. However, these examples are set forth to illustrate the present invention, and the scope of the present invention is not limited thereto.

[Example 1]

A temperature-controllable reactor was charged with dimethylacetamide (DMAc) as an organic solvent under a nitrogen atmosphere at 10°C. Then, 2,2'-bis(trifluoromethyl)-4,4'-diaminobiphenyl (TFMB) as an aromatic diamine was slowly added thereto and dissolved.

Thereafter, 2,2'-bis(3,4-dicarboxyphenyl)hexafluoropropane dianhydride (6-FDA) as a dianhydride compound was slowly added thereto, and the mixture was stirred for 2 hours.

Then, 2-ethylhexanol and methanol as alcohol-based supplements were each added such that each content in the final film was 10 ppm based on the total weight of the film.

Thereafter, as a dicarbonyl compound, terephthaloyl chloride (TPC) was added, followed by stirring for 1 hour; and isophthaloyl chloride (IPC) was added, followed by stirring for 1 hour, thereby preparing a polymer solution.

The polymer solution thus obtained was coated onto a substrate and then dried in a temperature range of 90°C to 140°C to prepare a gel sheet.

Thereafter, the gel sheet was treated with hot air at a temperature of 140°C to 250°C as a first thermal treatment step. Subsequently, the gel sheet passed through an IR heater, while the temperature of the heat source was set to 330°C, as a second thermal treatment step to obtain a polyamide-imide film with a thickness of 50 μm.

The specific composition and molar ratio of the polyamide-imide-based polymer are described in the Preparation Examples of Table 1 below.

**<Examples 2 to 6 and Comparative Examples 1 to 4>**

Films were each prepared in the same manner as in Example 1, except that the composition and molar ratio of the polymer, the content of the alcohol-based supplement, and the like were changed as shown in Tables 1 and 2 below.

**<Preparation Example> Composition of a polymer**

[Table 1]

| | | Prep. Ex. 1 | Prep. Ex. 2 | Prep. Ex. 3 |
|---|---|---|---|---|
| Polymerization ratio of the polyamide-imide-based polymer | Diamine compound (molar ratio) | TFMB 100 | TFMB 100 | TFMB 100 |
| | Dianhydride compound (molar ratio) | 6FDA 10 | 6FDA 10<br>BPDA 10 | 6FDA 20<br>BPDA 20 |
| | Dicarbonyl compound (molar ratio) | TPC 70<br>IPC 20 | TPC 80 | TPC 60 |

**<Evaluation Example>**

The films prepared in the Examples and Comparative Examples were each measured and evaluated for the following properties. The results are shown in Table 2 below.

Evaluation Example 1: Measurement of film thickness

The thickness was measured at 5 random points using a digital micrometer 547-401 manufactured by Mitutoyo Corporation. Their average value was adopted as the thickness.

Evaluation Example 2: Measurement of transmittance and haze

The light transmittance and haze were measured using a haze meter NDH-5000W manufactured by Nippon Denshoku Kogyo in accordance with the JIS K 7105 standard.

Evaluation Example 3: Measurement of yellow index

The yellow index (YI) was measured with a spectrophotometer (UltraScan PRO, Hunter Associates Laboratory) under the conditions of d65 and 10° in accordance with the ASTM-E313 standard.

Evaluation Example 4: Measurement of polydispersity index (PDI) and peak intensity

The polydispersity index (PDI) was determined as a value obtained by dividing the weight average molecular weight (Mw) by the number average molecular weight (Mn). The weight average molecular weight (Mw) and number average molecular weight (Mn) were measured by gel permeation chromatography (GPC) analysis.

The peak intensity was determined as the detection signal (detector response, mV) of the GPC detector for the peak covering a retention time of 19.7 minutes in GPC analysis.

The GPC analysis was carried out at 50°C using a 1260 Infinity GPC system of Agilent by injecting 100 μl of a polymer solution dissolved in NMP at a concentration of 0.1% by weight, feeding NMP (0.1% LiBr) as a mobile phase at a flow rate of 1.0 ml/minute, connecting one guard column and two PLgel Mixed C columns in series as a column, using PMMA as a standard material, and using a RID detector.

Evaluation Example 5: Evaluation of solvent resistance

A film sample (5 cm × 15 cm) was immersed in a solvent for 5 seconds, dried at 80°C for 3 minutes, and measured for the haze again by the method according to Evaluation Example 2 above. The smaller the change in haze, the better the solvent resistance. MIBK or PGME was used as the solvent.

[Table 2]

| | Composition | | | Example | | | | | | | |
|---|---|---|---|---|---|---|---|---|---|---|---|
| | Polymerization ratio of the polymer | Aliphatic alcohol substituted with an alkyl group (ppm) | Unsubstituted aliphatic alcohol (ppm) | Thickness (μm) | Transmittance (%) | Haze (%) | Yellow index | Polydispersity index (PDI) | Peak Intensity (R.T. 19.7 min.) (mV) | Solvent resistance (ΔHz) | |
| | | | | | | | | | | MIBK | PGME |
| Ex. 1 | Prep. Ex. 1 | 10 | 10 | 50 | 88.6 | 0.51 | 2.52 | 2.35 | 300 | 0.16 | 0.21 |
| Ex. 2 | Prep. Ex. 1 | 50 | 50 | 50 | 88.5 | 0.52 | 2.86 | 2.46 | 400 | 0.22 | 0.31 |
| Ex. 3 | Prep. Ex. 1 | 100 | 100 | 50 | 88.2 | 0.49 | 3.11 | 2.81 | 550 | 0.54 | 0.76 |
| Ex. 4 | Prep. Ex. 1 | 200 | 200 | 50 | 88.4 | 0.53 | 3.45 | 3.13 | 850 | 1.29 | 1.58 |
| Ex. 5 | Prep. Ex. 2 | 50 | 50 | 50 | 88.5 | 0.52 | 2.86 | 2.51 | 450 | 0.27 | 0.44 |
| Ex. 6 | Prep. Ex. 3 | 50 | 50 | 50 | 88.5 | 0.48 | 3.11 | 2.86 | 550 | 0.28 | 0.49 |
| C. Ex. 1 | Prep. Ex. 1 | 0 | 0 | 50 | 88.0 | 0.61 | 4.33 | 3.81 | 1450 | 3.56 | 4.78 |
| C. Ex. 2 | Prep. Ex. 3 | 0 | 0 | 50 | 88.4 | 0.56 | 4.06 | 3.93 | 1550 | 3.62 | 5.08 |
| C. Ex. 3 | Prep. Ex. 1 | 600 | 600 | 50 | 88.0 | 0.58 | 4.11 | 3.69 | 1250 | 2.92 | 3.67 |
| C. Ex. 4 | Prep. Ex. 2 | 600 | 600 | 50 | 88.1 | 0.59 | 4.19 | 3.76 | 1350 | 2.44 | 3.85 |

Referring to Table 2, the films according to the Examples comprising a specific content of an alcohol-based supplement (aliphatic alcohol substituted with an alkyl group and unsubstituted aliphatic alcohol) were excellent in optical properties such as transmittance, haze, and yellow index, had a polydispersity index (PDI) adjusted to a certain range, thereby reducing residual low-molecular-weight materials and improving the degree of polymerization, and had a change in haze after immersion in a solvent at a certain level or lower, indicating excellent solvent resistance.

**Explanation of Reference Numerals**

| | | | |
|---|---|---|---|
| 100: | polyamide-imide-based film | | |
| 101: | first side | 102: | second side |
| 200: | functional layer | 300: | cover window |
| 400: | display unit | 500: | adhesive layer |

**Claims**

**1.** A polyamide-imide-based film, which comprises an alcohol-based supplement, wherein the content of the alcohol-based supplement is 10 to 1,000 ppm based on the total weight of the film; and wherein the alcohol-based supplement comprises an aliphatic alcohol substituted with an alkyl group and an unsubstituted aliphatic alcohol, the content of the aliphatic alcohol substituted with an alkyl group is 5 to 500 ppm based on the total weight of the film, and the content of the unsubstituted aliphatic alcohol is 5 to 500 ppm based on the total weight of the film.

**2.** The polyamide-imide-based film of claim 1, wherein the film has a polydispersity index (PDI) of 2 to 4 when the PDI is determined by dividing the weight average molecular weight (Mw) by the number average molecular weight (Mn), where the weight average molecular weight (Mw) and number average molecular weight (Mn) are measured by gel permeation chromatography (GPC) analysis.

**3.** The polyamide-imide-based film of claim 1, wherein, in a GPC analysis of the polyamide-imide-based film, the peak intensity of the peak covering a retention time of 19.7 minutes is 1,500 mV or less:
wherein the GPC analysis is carried out at 50°C using a 1260 Infinity GPC system of Agilent by feeding NMP (0.1% LiBr) as a mobile phase at a flow rate of 1.0 ml/minute, connecting one guard column and two PLgel Mixed C columns in series as a column, using PMMA as a standard material, and using a RID detector.

**4.** The polyamide-imide-based film of claim 1, wherein when the film is immersed in an MIBK solvent for 5 seconds, dried at 80°C for 3 minutes, and then measured for haze, the change in haze ($\Delta Hz_M$) is 3% or less,
where $\Delta Hz_M$ (%) = $Hz_M$ - $Hz_0$, in which $Hz_0$ is the initial haze (%) of the film, and $Hz_M$ is the haze (%) measured after the film is immersed in an MIBK solvent for 5 seconds and dried at 80°C for 3 minutes, the haze values being measured in the visible light wavelength range (400 to 700 nm).

**5.** The polyamide-imide-based film of claim 1, wherein when the film is immersed in a PGME solvent for 5 seconds, dried at 80°C for 3 minutes, and then measured for haze, the change in haze ($\Delta Hz_P$) is 4% or less,
where $\Delta Hz_P$ (%) = $Hz_P$ - $Hz_0$, in which $Hz_0$ is the initial haze (%) of the film, and $Hz_P$ is the haze (%) measured after the film is immersed in a PGME solvent for 5 seconds and dried at 80°C for 3 minutes, the haze values being measured in the visible light wavelength range (400 to 700 nm).

**6.** The polyamide-imide-based film of claim 1, wherein the film comprises a polyamide-imide-based polymer, and the polyamide-imide-based polymer comprises an imide-based repeat unit and an amide-based repeat unit at a molar ratio of 2:98 to 70:30.

**7.** The polyamide-imide-based film of claim 1, which, based on a thickness of the film of 50 μm, has a transmittance of 80% or more, a haze of 1% or less, and a yellow index of 5 or less, where:

the haze and transmittance values are measured in the visible light wavelength range (400 to 700 nm); and
the yellow index is measured with a spectrophotometer under the conditions of d65 and 10° in accordance with the ASTM-E313 standard.

**8.** A cover window for a display device, which comprises a polyamide-imide-based film according to claim 1 and a functional layer.

**9.** A display device, which comprises a display unit; and a cover window disposed on the display unit,
wherein the cover window comprises a polyamide-imide-based film according to claim 1 and a functional layer.

**10.** A process for preparing the polyamide-imide-based film of claim 1, which comprises:

polymerizing a diamine compound, a dianhydride compound, and a dicarbonyl compound in an organic solvent to prepare a polyamide-imide-based polymer solution, wherein the step of preparing the polyamide-imide-based polymer solution comprises adding an alcohol-based supplement, wherein the alcohol-based supplement comprises an aliphatic alcohol substituted with an alkyl group and an unsubstituted aliphatic alcohol, the content of the aliphatic alcohol substituted with an alkyl group is 5 to 500 ppm based on the total weight of the film, and the content of the unsubstituted aliphatic alcohol is 5 to 500 ppm based on the total weight of the film;
casting the solution and then drying it to prepare a gel sheet; and
thermally treating the gel sheet.

**Patentansprüche**

**1.** Polyamidimidbasierter Film, der einen Zusatz auf Alkoholbasis umfasst, wobei der Gehalt des Zusatzes auf Alkoholbasis basierend auf dem Gesamtgewicht des Films 10 bis 1.000 ppm beträgt; und wobei der Zusatz auf Alkoholbasis einen durch eine Alkylgruppe substituierten aliphatischen Alkohol und einen nicht substituierten aliphatischen Alkohol umfasst, wobei der Gehalt des durch eine Alkylgruppe substituierten aliphatischen Alkohols basierend auf dem Gesamtgewicht des Films 5 bis 500 ppm beträgt und der Gehalt des nicht substituierten aliphatischen Alkohols basierend auf dem Gesamtgewicht des Films 5 bis 500 ppm beträgt.

**2.** Polyamidimidbasierter Film nach Anspruch 1, wobei der Film einen Polydispersitätsindex (PDI) von 2 bis 4 aufweist, wenn der PDI durch Teilen des gewichtsgemittelten Molekulargewichts (Mw) durch den Zahlenmittelwert des Molekulargewichts (Mn) bestimmt wird, wobei das gewichtsgemittelten Molekulargewicht (Mw) und der Zahlenmittelwert des Molekulargewichts (Mn) durch Gelpermeationschromatographie- (GPC-) Analyse gemessen werden.

**3.** Polyamidimidbasierter Film nach Anspruch 1, wobei in einer GPC-Analyse des polyamidimidbasierten Films die Spitzenintensität der eine Retentionszeit von 19,7 Minuten abdeckenden Spitze 1.500 mV oder weniger beträgt:
wobei die GPC-Analyse bei 50 °C unter Verwendung eines 1260 Infinity GPC-System von Agilent durch Einspeisen von NMP (0,1 % LiBr) als mobile Phase bei einer Strömungsgeschwindigkeit von 1,0 ml/Minute ausgeführt wird, wobei eine Vorsäule und zwei PLgel-Mixed-C-Säulen in Serie als eine Säule verbunden sind, unter Verwendung von PMMA als Standardmaterial und unter Verwendung eines RID-Detektors.

**4.** Polyamidimidbasierter Film nach Anspruch 1, wobei, wenn der Film 5 Sekunden lang in ein MIBK-Lösungsmittel eingetaucht, 3 Minuten lang bei 80 °C getrocknet und dann auf Trübung gemessen wird, die Trübungsveränderung ($\Delta Hz_M$) 3 % oder weniger beträgt,
wobei $\Delta Hz_M$ (%) = $Hz_M$ - $Hz_0$, worin $Hz_0$ die anfängliche Trübung (%) des Films ist und $Hz_M$ die Trübung (%) ist, die gemessen wird, nachdem der Film 5 Sekunden lang in ein MIBK-Lösungsmittel eingetaucht und 3 Minuten lang bei 80 °C getrocknet wird, wobei die Trübungswerte im Wellenbereich von sichtbarem Licht (400 bis 700 nm) gemessen werden.

**5.** Polyamidimidbasierter Film nach Anspruch 1, wobei, wenn der Film 5 Sekunden lang in ein PGME-Lösungsmittel eingetaucht, 3 Minuten lang bei 80 °C getrocknet und dann auf Trübung gemessen wird, die Trübungsveränderung ($\Delta Hz_P$) 4 % oder weniger beträgt,
wobei $\Delta Hz_P$ (%) = $Hz_P$ - $Hz_0$, worin $Hz_0$ die anfängliche Trübung (%) des Films ist und $Hz_P$ die Trübung (%) ist, die gemessen wird, nachdem der Film 5 Sekunden lang in ein PGME-Lösungsmittel eingetaucht und 3 Minuten lang bei 80 °C getrocknet wird, wobei die Trübungswerte im Wellenbereich von sichtbarem Licht (400 bis 700 nm) gemessen werden.

**6.** Polyamidimidbasierter Film nach Anspruch 1, wobei der Film ein polyamidimidbasiertes Polymer umfasst und das polyamidimidbasierte Polymer eine imidbasierte Wiederholungseinheit und eine amidbasierte Wiederholungseinheit bei einem Molarverhältnis von 2:98 bis 70:30 umfasst.

7. Polyamidimidbasierter Film nach Anspruch 1, der basierend auf einer Dicke des Films von 50 μm einen Durchlässigkeitsgrad von 80 % oder mehr, eine Trübung von 1 % oder weniger und einen Gelbindex von 5 oder weniger aufweist, wobei:

   die Werte der Trübung und des Durchlässigkeitsgrads im Wellenbereich von sichtbarem Licht (400 bis 700 nm) gemessen werden; und
   der Gelbindex mit einem Spektralphotometer unter den Bedingungen von d65 und 10° gemäß dem Standard ASTM-E313 gemessen wird.

8. Abdeckfenster für eine Anzeigevorrichtung, die einen polyamidimidbasierter Film nach Anspruch 1 und eine Funktionsschicht umfasst.

9. Anzeigevorrichtung, die eine Anzeigeeinheit und ein auf der Anzeigeeinheit angeordnetes Abdeckfenster umfasst, wobei das Abdeckfenster eine polyamidimidbasierter Film nach Anspruch 1 und eine Funktionsschicht umfasst.

10. Prozess zum Herstellen des polyamidimidbasierten Films nach Anspruch 1, der Folgendes umfasst:

   Polymerisieren einer Diaminverbindung, einer Dianhydridverbindung und einer Dicarbonylverbindung in einem organischen Lösungsmittel, um eine polyamidimidbasierte Polymerlösung herzustellen, wobei der Schritt des Herstellens der polyamidimidbasierten Polymerlösung Zugeben eines Zusatzes auf Alkoholbasis umfasst, wobei der Zusatz auf Alkoholbasis einen durch eine Alkylgruppe substituierten aliphatischen Alkohol und einen nicht substituierten aliphatischen Alkohol umfasst, wobei der Gehalt des durch eine Alkylgruppe substituierten aliphatischen Alkohols basierend auf dem Gesamtgewicht des Films 5 bis 500 ppm beträgt, und der Gehalt des nicht substituierten aliphatischen Alkohols basierend auf dem Gesamtgewicht des Films 5 bis 500 ppm beträgt;
   Gießen der Lösung und dann Trocknen derselben, um eine Gelplatte herzustellen; und
   thermische Behandlung der Gelplatte.

## Revendications

1. Film à base de polyamide-imide, qui comprend un supplément à base d'alcool, dans lequel la teneur du supplément à base d'alcool est comprise entre 10 et 1 000 ppm sur la base du poids total du film ; et dans lequel le supplément à base d'alcool comprend un alcool aliphatique substitué par un groupe alkyle et un alcool aliphatique non substitué, la teneur de l'alcool aliphatique substitué par un groupe alkyle est comprise entre 5 et 500 ppm sur la base du poids total du film, et la teneur de l'alcool aliphatique non substitué est comprise entre 5 et 500 ppm sur la base du poids total du film.

2. Film à base de polyamide-imide selon la revendication 1, dans lequel le film présente un indice de polydispersité (PDI) compris entre 2 et 4 lorsque le PDI est déterminé en divisant le poids moléculaire moyen en poids (Mw) par le poids moléculaire moyen en nombre (Mn), où le poids moléculaire moyen en poids (Mw) et le poids moléculaire moyen en nombre (Mn) sont mesurés par analyse par chromatographie par perméation de gel (GPC).

3. Film à base de polyamide-imide selon la revendication 1, dans lequel, dans une analyse GPC du film à base de polyamide-imide, l'intensité de pic du pic couvrant un temps de rétention de 19,7 minutes est de 1 500 mV ou moins : dans lequel l'analyse GPC est effectuée à 50 °C en utilisant un système GPC Agilent 1260 Infinity en introduisant la NMP (0,1 % de LiBr) en tant que phase mobile à un débit de 1,0 ml/minute, en reliant une colonne de protection et deux colonnes PLgel MIXED C en série en tant qu'une colonne, en utilisant du PMMA en tant que matériau standard, et en utilisant un détecteur RID.

4. Film à base de polyamide-imide selon la revendication 1, dans lequel lorsque le film est immergé dans un solvant MIBK pendant 5 secondes, séché à 80 °C pendant 3 minutes, puis mesuré pour le voile, le changement de voile ($\Delta Hz_M$) est de 3 % ou moins,
   où $\Delta Hz_M$ (%) = $Hz_M$ - $Hz_0$, dans lequel $Hz_0$ est le voile initial (%) du film, et HZM est le voile (%) mesuré après que le film a été immergé dans un solvant MIBK pendant 5 secondes et séché à 80 °C pendant 3 minutes, les valeurs de voile étant mesurées dans la plage de longueur d'onde de lumière visible (de 400 à 700 nm).

5. Film à base de polyamide-imide selon la revendication 1, dans lequel lorsque le film est immergé dans un solvant PGME pendant 5 secondes, séché à 80 °C pendant 3 minutes, puis mesuré pour le voile, le changement de voile ($\Delta Hz_P$) est de 4 % ou moins,

où $\Delta Hz_P$ (%) = $Hz_P$ - $Hz_0$, dans lequel $Hz_0$ est le voile initial (%) du film, et $Hz_P$ est le voile (%) mesuré après que le film a été immergé dans du solvant PGME pendant 5 secondes et séché à 80 °C pendant 3 minutes, les valeurs de voile étant mesurées dans la plage de longueur d'onde de lumière visible (de 400 à 700 nm).

**6.** Film à base de polyamide-imide selon la revendication 1, dans lequel le film comprend un polymère à base de polyamide-imide, et le polymère à base de polyamide-imide comprend une unité de répétition à base d'imide et une unité de répétition à base d'amide à un rapport molaire compris entre 2:98 et 70:30.

**7.** Film à base de polyamide-imide selon la revendication 1, qui, sur la base d'une épaisseur du film de 50 µm, présente une transmittance de 80 % ou plus, un voile de 1 % ou moins, et un indice de jaune de 5 ou moins, où :

les valeurs de voile et de transmittance sont mesurées dans la plage de longueur d'onde de lumière visible (de 400 à 700 nm) ; et
l'indice de jaune est mesuré avec un spectrophotomètre dans les conditions de d65 et 10° conformément à la norme ASTM-E313.

**8.** Fenêtre de couverture pour un dispositif d'affichage, qui comprend un film à base de polyamide-imide selon la revendication 1 et une couche fonctionnelle.

**9.** Dispositif d'affichage, qui comprend une unité d'affichage ; et une fenêtre de couverture disposée sur l'unité d'affichage,
dans lequel la fenêtre de couverture comprend un film à base de polyamide-imide selon la revendication 1 et une couche fonctionnelle.

**10.** Procédé de préparation du film à base de polyamide-imide selon la revendication 1, qui comprend :

une polymérisation d'un composé diamine, d'un composé dianhydride et d'un composé dicarbonyle dans un solvant organique pour préparer une solution polymère à base de polyamide-imide, dans lequel l'étape de préparation de la solution polymère à base de polyamide-imide comprend un ajout d'un supplément à base d'alcool, dans lequel le supplément à base d'alcool comprend un alcool aliphatique substitué par un groupe alkyle et un alcool aliphatique non substitué, la teneur de l'alcool aliphatique substitué par un groupe alkyle est comprise entre 5 et 500 ppm sur la base du poids total du film, et la teneur de l'alcool aliphatique non substitué est comprise entre 5 et 500 ppm sur la base du poids total du film ;
une coulée de la solution puis son séchage pour préparer une feuille de gel ; et
un traitement thermique de la feuille de gel.

Fig. 1

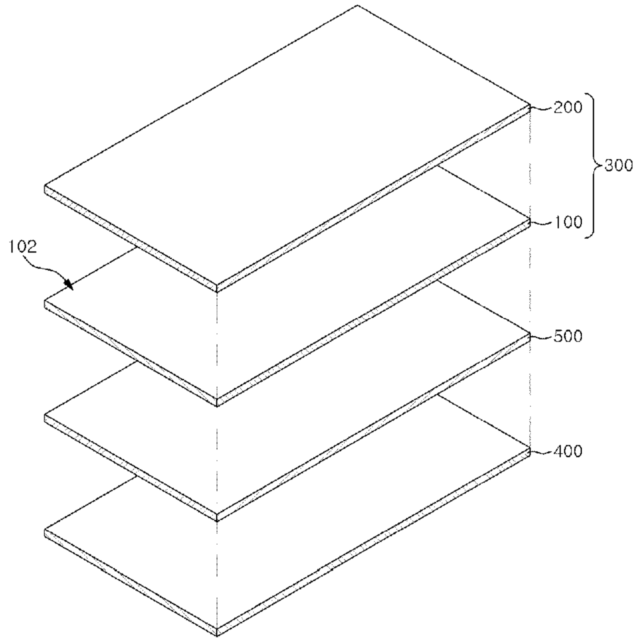


Fig. 2

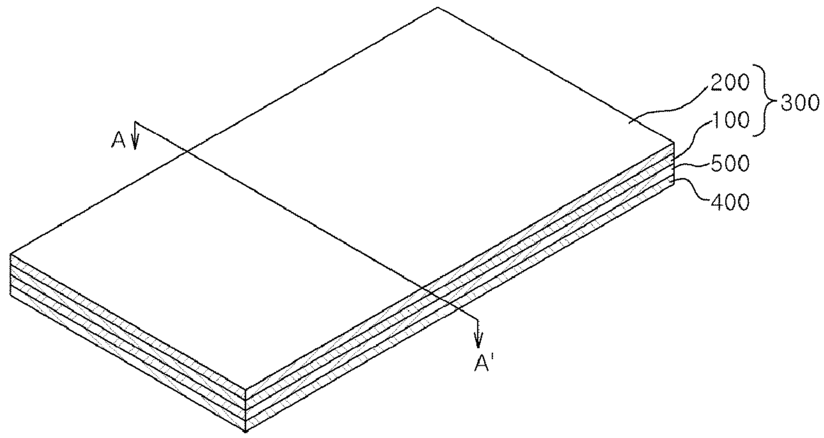

Fig. 3

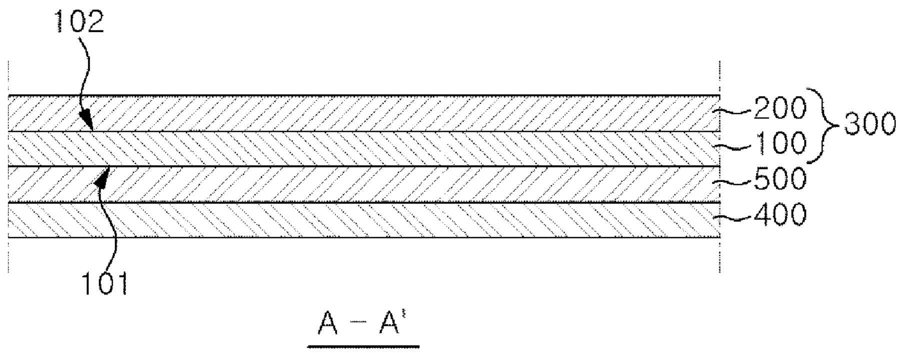
102
200
100
300
500
400
101
A - A'

Fig. 4

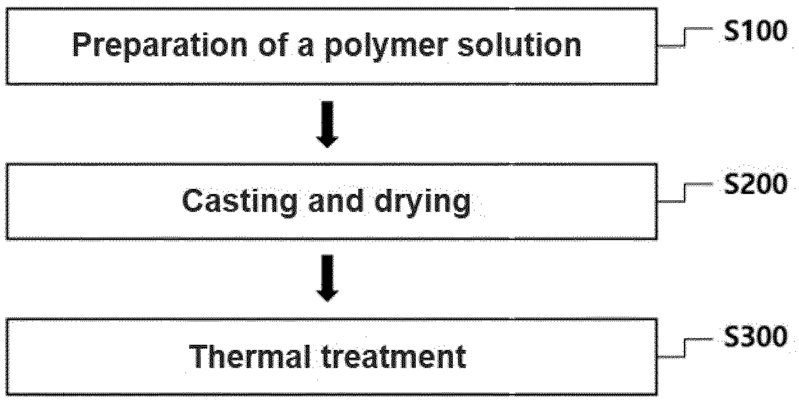
Preparation of a polymer solution
S100
Casting and drying
S200
Thermal treatment
S300

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022054850 A